# EUROPÄISCHE PATENTSCHRIFT

(11) **EP 1 646 808 B1**
(45) Veröffentlichungstag und Bekanntmachung des Hinweises auf die Patenterteilung: **21.01.2009**
(21) Anmeldenummer: 04740365.4
(22) Anmeldetag: 28.06.2004
(51) Int. Cl.: F16H 3/66

(54) **MEHRSTUFEN-AUTOMATGETRIEBE MIT DREI PLANETENRADSÄTZEN**
MULTI-SPEED AUTOMATIC GEARBOX WITH THREE PLANETARY GEARSETS
BOITE DE VITESSES AUTOMATIQUE A PLUSIEURS VITESSES COMPORTANT TROIS TRAINS PLANETAIRES

(30) Priorität: 23.07.2003 DE 10333430
(43) Veröffentlichungstag der Anmeldung: 19.04.2006
(73) Patentinhaber: ZF Friedrichshafen AG, 88038 Friedrichshafen (DE)
(72) Erfinder: DIOSI, Gabor, 88045 Friedrichshafen (DE); HAUPT, Josef, 88069 Tettnang (DE); BREHMER, Martin, 78467 Konstanz (DE)
(86) Internationale Anmeldenummer: PCT/EP2004/006964
(87) Internationale Veröffentlichungsnummer: WO 2005/019690

(56) Entgegenhaltungen:
- DE-A- 2 721 719
- DE-A- 4 224 360
- DE-A- 10 206 145
- DE-A- 19 524 698
- DE-A- 19 912 480
- DE-A- 19 912 481
- US-A1- 2003 060 322
- PATENT ABSTRACTS OF JAPAN Bd. 0170, Nr. 96 (M-1372), 25. Februar 1993 (1993-02-25) & JP 4 290649 A (NISSAN MOTOR CO LTD; others: 01), 15. Oktober 1992 (1992-10-15)
- PATENT ABSTRACTS OF JAPAN Bd. 1998, Nr. 14, 31. Dezember 1998 (1998-12-31) & JP 10 259861 A (JATCO CORP), 29. September 1998 (1998-09-29)

## Beschreibung

Die vorliegende Erfindung betrifft ein Mehrstufen-Automatgetriebe mit mindestens drei Einzel-Planetenradsätzen und mindestens fünf Schaltelementen, nach dem Oberbegriff des Patentanspruchs 1.

Automatgetriebe mit mehreren, ohne Gruppenschaltung schaltbaren Gängen sind vielfältig bekannt. Aus der DE 199 12 480 A1 beispielsweise ist ein gattungsgemäßes Automatgetriebe mit drei Einsteg-Planetenradsätzen sowie drei Bremsen und zwei Kupplungen zum Schalten von sechs Vorwärtsgängen und einem Rückwärtsgang bekannt, das für Kraftfahrzeuge sehr gut geeignete Übersetzungen mit einer hohen Gesamtspreizung und günstigen Stufensprüngen sowie einer hohen Anfahrübersetzung in Vorwärtsrichtung aufweist. Die einzelnen Gänge werden durch selektives Schließen von jeweils zwei der sechs Schaltelemente erzielt, sodaß zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird.

Dabei ist eine Antriebswelle des Automatgetriebes ständig mit einem Sonnenrad des zweiten Planetenradsatzes verbunden. Weiterhin ist die Antriebswelle über die erste Kupplung mit einem Sonnenrad des ersten Planetenradsatzes und/oder über die zweite Kupplung mit einem Steg des ersten Planetenradsatzes verbindbar. Zusätzlich oder alternativ ist das Sonnenrad des ersten Planetenradsatzes über die erste Bremse mit einem Gehäuse des Automatgetriebes und/oder der Steg des ersten Planetenradsatzes über die zweite Bremse mit dem Gehäuse und/oder ein Sonnenrad des dritten Planetenradsatzes über die dritte Bremse mit dem Gehäuse verbindbar.

Für die kinematische Kopplung der einzelnen Planeten-radsätze miteinander offenbart die DE 199 12 480 A1 zwei verschiedene Versionen. In der ersten Version ist vorgesehen, daß eine Abtriebswelle des Automatgetriebes ständig mit einem Steg des dritten Planetenradsatzes und einem Hohlrad des ersten Planetenradsatzes verbunden ist, und daß der Steg des ersten Planetenradsatzes ständig mit einem Hohlrad des zweiten Planetenradsatzes und ein Steg des zweiten Planetenradsatzes ständig mit einem Hohlrad des dritten Planetenradsatzes verbunden ist. Die Antriebs- und die Abtriebswelle können dabei sowohl koaxial zueinander auf gegenüberliegenden Seiten des Getriebegehäuses angeordnet sein, als auch achsparallel auf derselben Seite des Getriebegehäuses. In der zweiten Version ist vorgesehen, daß die Abtriebswelle ständig mit dem Steg des zweiten Planetenradsatzes und dem Hohlrad des ersten Planetenradsatzes verbunden ist, daß der Steg des ersten Planetenradsatzes ständig mit dem Hohlrad des dritten Planetenradsatzes verbunden ist, und daß das Hohlrad des zweiten Planetenradsatzes ständig mit dem Steg des dritten Planetenradsatzes verbunden ist. Eine derartige Ausbildung ist besonders für eine koaxiale Anordnung von An- und Abtriebswellen geeignet.

Hinsichtlich der räumlichen Anordnung der Planetenradsätze schlägt die DE 199 12 480 A1 vor, die drei Planetenradsätze koaxial in Reihe nebeneinander anzuordnen, wobei der zweite Planetenradsatz axial zwischen dem ersten und dritten Planetenradsatz angeordnet ist. Hinsichtlich der räumlichen Anordnung der einzelnen Schaltelemente relativ zu einander und relativ zu den Planetenradsätzen schlägt die DE 199 12 480 A1 vor, die erste und zweite Bremse stets unmittelbar nebeneinander anzuordnen, wobei die zweite Bremse stets unmittelbar axial an den ersten Planetenradsatz angrenzt, und die dritte Bremse stets auf der dem ersten Planetenradsatzes abgewandten Seite der dritten Planetenradsatzes anzuordnen, sowie.die beiden Kupplungen stets unmittelbar nebeneinander anzuordnen. In einer ersten Anordnungsvariante sind beide Kupplungen auf der dem dritten Planetenradsatz abgewandten Seite des ersten Planetenradsatzes angeordnet, wobei die erste Kupplung axial unmittelbar an die erste Bremse angrenzt und näher am ersten Planetenradsatz angeordnet ist als die zweite Kupplung. In Verbindung mit einer nicht koaxialen Lage von Antriebs- und Abtriebswelle wird in einer zweiten Anordnungsvariante vorgeschlagen, daß beide Kupplungen auf der dem ersten Planetenradsatz abgewandten Seite des dritten Planetenradsatzes angeordnet sind, wobei die zweite Kupplung näher am dritten Planetenradsatz angeordnet ist als die erste Kupplung und axial an ein mit der Abtriebswelle wirkverbundenes Abtriebsstirnrad angrenzt, welches wiederum auf der dem dritten Planetenradsatz abgewandten Seite der dritten Bremse angeordnet ist.

Der vorliegenden Erfindung liegt die Aufgabe zugrunde, für das aus dem Stand der Technik der DE 199 12 480 A1 bekannte Automatgetriebes alternative Bauteilanordnungen darzustellen, mit möglichst kompaktem und in Getriebelängsrichtung vergleichsweise schlankem Getriebeaufbau. Vorzugsweise soll das Automatgetriebe in einem Kraftfahrzeug mit Standard-Antrieb und koaxialer Anordnung von Antriebs- und Abtriebswelle Anwendung finden können, durch vergleichsweise einfache Modifikationen möglichst aber auch bei nicht koaxialer Antriebs- und Abtriebswelle einsetzbar sein.

Erfindungsgemäß gelöst wird die Aufgabe durch ein Mehrstufen-Automatgetriebe mit den Merkmalen des Patentanspruchs 1. Vorteilhafte Ausgestaltungen und Weiterbildungen der Erfindung ergeben sich aus den Unteransprüchen.

Ausgehend vom gattungsgemäßen Stand der Technik der DE 199 12 480 A1, weist das Mehrstufen-Automatgetriebe mindestens drei gekoppelte Einzel-Planetenradsätze auf, die koaxial zueinander angeordnet sind, wobei der zweite Planetenradsatz räumlich gesehen stets zwischen dem ersten und zweiten Planetenradsatz angeordnet ist. Weiterhin weist das Mehrstufen-Automatgetriebe mindestens fünf Schaltelemente auf. Ein Sonnenrad des dritten Planetenradsatzes ist über das als Bremse ausgebildete erste Schaltelement an einem Getriebegehäuse des Mehrstufen-Automatgetriebes festsetzbar. Eine Antriebswelle des Mehrstufen-Automatgetriebes ist ständig mit einem Sonnenrad des zweiten Planetenradsatzes verbunden. Weiterhin ist die Antriebswelle über das als Kupplung ausgebildete zweite Schaltelement mit einem Sonnenrad des ersten Planetenradsatzes und zusätzlich oder alternativ über das als Kupplung ausgebildete fünfte Schaltelement mit einem Steg des ersten Planetenradsatzes verbindbar. Alternativ ist das Sonnenrad des ersten Planetenradsatzes über das als Bremse ausgebildete dritte Schaltelement und/oder der Steg des ersten Planetenradsatzes über das als Bremse ausgebildete vierte Schaltelement an dem Getriebegehäuse festsetzbar.

Eine Abtriebswelle des Mehrstufen-Automatgetriebes ist ständig mit einem Hohlrad des ersten Planetenradsatzes wirkverbunden, wobei das Hohlrad des ersten Planetenradsatzes zusätzlich ständig entweder mit einem Steg des dritten Planetenradsatzes oder einem Steg des zweiten Planetenradsatzes verbunden ist.

Gemäß der Erfindung wird also der erste Planetenradsatz in axialer Richtung nur von einer Welle zentrisch vollständig durchgriffen, insbesondere von der Antriebswelle des Automatgetriebes. Entsprechend wird auch der zweite, mittlere Planetenradsatz höchstens von einer Welle, insbesondere der Antriebswelle in axialer Richtung zentrisch durchgriffen. Im Unterschied zum Stand der Technik der DE 199 12 480 A1 ist hierzu das fünfte Schaltelement, über welches die Antriebswelle mit dem Steg des ersten Planetenradsatzes verbindbar ist, räumlich gesehen zwischen dem ersten und zweiten Planetenradsatz anzuordnen.

Vorzugsweise ist dabei das zweite Schaltelement, über welches das Sonnenrad des ersten Planetenradsatzes mit der Antriebswelle verbindbar ist, auf der dem fünften Schaltelement gegenüberliegenden Seite des ersten Planetenradsatzes angeordnet. Vorzugsweise ist dabei eine Servoeinrichtung des zweiten Schaltelementes benachbart zum ersten Planetenradsatz angeordnet, vorzugsweise näher am ersten Planetenradsatz als eine Servoeinrichtung des dritten Schaltelementes.

Auch das vierte Schaltelement, über welches der Steg des ersten Planetenradsatzes festsetzbar ist, und das dritte Schaltelement, über welches das Sonnenrad des ersten Planetenradsatzes festsetzbar ist, können auf der dem fünften Schaltelement gegenüberliegenden Seite des ersten Planetenradsatzes angeordnet sein, jedoch auch räumlich gesehen nebeneinander über den Planetenradsätzen.

In einer vorteilhaften Ausgestaltung der Anordnung des zweiten, dritten und vierten Schaltelementes wird vorgeschlagen, die Servoeinrichtungen zur Betätigung von Lamellen des dritten und vierten Schaltelementes zumindest weitgehend in eine Gehäuseaußenwand eines Getriebegehäuses des Automatgetriebes oder in einen mit dem Getriebegehäuse verbundenen Getriebegehäusedeckel, der eine Außenwand des Getriebegehäuses bildet, zu integrieren. Diese Gehäuseaußenwand bzw. dieser Getriebegehäusedeckel weist also entsprechende Kolbenräume (Druckräume) und darin verschiebbar gelagerte druckbeaufschlagbare Kolben der Servoeinrichtungen des dritten und vierten Schaltelementes auf, zur Betätigung derer jeweiligen Reibelemente. Hierdurch wird eine sehr einfache Druckmittelzufuhr zu diesen beiden Schaltelementen ermöglicht sowie eine einfache, für den Montageablauf kostengünstige Baugruppen-Vormontage. Bei dieser Ausgestaltung können die Lamellen des dritten und vierten Schaltelementes beispielsweise unmittelbar neben der (mit den Servoeinrichtungen des dritten und vierten Schaltelementes komplettierten) Gehäuseaußenwand bzw. dem Getriebegehäusedeckel angeordnet sein, wobei dann die Lamellen des zweiten Schaltelementes näher an dem ersten Planetenradsatz angeordnet sind als die Lamellen des vierten Schaltelementes und die Lamellen des dritten Schaltelementes zweckmäßigerweise radial unterhalb der Lamellen des vierten Schaltelementes angeordnet sind.

Es kann aber auch vorgesehen sein, daß die Lamellen des zweiten und dritten Schaltelementes an die mit den Servoeinrichtungen des dritten und vierten Schaltelementes komplettierte Gehäuseaußenwand bzw. an den mit den Servoeinrichtungen des dritten und vierten Schaltelementes komplettierten Getriebegehäusedeckel angrenzen. In diesem Fall sind die Lamellen des vierten Schaltelementes näher an dem ersten Planetenradsatz angeordnet als die Lamellen des zweiten Schaltelementes, die Lamellen des dritten Schaltelementes radial unterhalb der Lamellen des zweiten Schaltelementes angeordnet, sowie die Servoeinrichtung des dritten Schaltelementes radial unterhalb der Servoeinrichtung des vierten Schaltelementes angeordnet. Dabei übergreift ein Betätigungselement (Betätigungs-stempel) der Servoeinrichtung des vierten Schaltelementes die Lamellen des zweiten Schaltelementes vorzugsweise vollständig und die Servoeinrichtung des zweiten Schaltelementes in axialer Richtung zumindest teilweise radial. Durch diese Bauteilanordnung wird eine verbesserte Montierbarkeit des vierten und (vormontierten) zweiten Schaltelementes im Getriebegehäuse an dem ersten Planetenradsatz erzielt, ohne auf einen möglichst großen Durchmesser für die Lamellen des thermisch hoch belasteten zweiten Schaltelementes zu verzichten

In einer anderen Ausgestaltung der Anordnung des zweiten, dritten und vierten Schaltelementes auf einer Seite des ersten Planetenradsatzes können alle drei Lamellenpakete des zweiten, dritten und vierten Schaltelementes an die mit den Servoeinrichtungen des dritten und vierten Schaltelementes komplettierte Gehäuseaußenwand bzw. an den mit den Servoeinrichtungen des dritten und vierten Schaltelementes komplettierten Getriebegehäusedeckel angrenzen. In diesem Fall sind die Lamellen des vierten Schaltelementes oberhalb der Lamellen des zweiten Schaltelementes und die Lamellen des zweiten Schaltelementes wiederum oberhalb der Lamellen des dritten Schaltelementes angeordnet.

In einer weiteren Ausgestaltung der ersten erfindungsgemäßen Lösung ist das erste Schaltelement, über welches das Sonnenrad des dritten Planetenradsatzes festsetzbar ist, räumlich gesehen auf der dem zweiten Planetenradsatz abgewandten Seite des dritten Planetenradsatzes angeordnet.

Durch die erfindungsgemäße Schachtelung der fünf Schaltelemente und drei Einzel-Planetenradsätze wird räumlich gesehen ein insgesamt sehr schlanker, kompakter Getriebeaufbau erzielt, der sich besonders für eine Anwendung in einem Kraftfahrzeug mit Standardantrieb und koaxial zueinander verlaufenden Antriebs- und Abtriebswelle eignet, wobei die mit dem Hohlrad des ersten Planetenradsatzes wirkverbundene Abtriebswelle den dritten Planetenradsatz und einen Kupplungsraum des ersten Schaltelementes in axialer Richtung zentrisch durchgreift. Für eine Anwendung mit nicht koaxialer Anordnung von Antriebs- und Abtriebswelle, also beispielsweise mit achsparalleler oder winkliger Anordnung von Antriebs- und Abtriebswelle, kann die Abtriebswelle auch räumlich gesehen im Bereich radial oberhalb der Planetenradsätze mit dem Hohlrad des ersten Planetenradsatzes wirkverbunden sein.

Die erfindungsgemäße Bauteileanordnung ist auf beide im Stand der Technik der DE 199 12 480 A1 offenbarten Radsatzschemata anwendbar. Falls Hohlrad des ersten Planetenradsatzes und Steg des dritten Planetenradsatzes und Abtriebswelle miteinander gekoppelt sind, ist der Steg des zweiten Planetenradsatzes ständig mit einem Hohlrad des dritten Planetenradsatzes und der Steg des ersten Planetenradsatzes ständig mit einem Hohlrad des zweiten Planetenradsatzes verbunden. Falls Hohlrad des ersten Planetenradsatzes und Steg des zweiten Planetenradsatzes und Abtriebswelle miteinander gekoppelt sind, ist der Steg des dritten Planetenradsatzes ständig mit dem Hohlrad des zweiten Planetenradsatzes und der Steg des ersten Planetenradsatzes ständig mit dem Hohlrad des dritten Planetenradsatzes verbunden.

Durch diese kinematische Koppelung der einzelnen Radsatzelemente untereinander und mit der Antriebs- und Abtriebswelle über die fünf Schaltelemente sind - wie beim Stand der Technik der DE 199 12 480 A1 - insgesamt sechs Vorwärtsgänge derart schaltbar, daß beim Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird.

Die Erfindung wird im folgenden anhand der Figuren näher erläutert, wobei ähnliche Elemente auch mit ähnlichen Bezugszeichen versehen sind. Es zeigen
- Fig. 1: ein Getriebeschema gemäß dem Stand der Technik;
- Fig. 2: ein Schaltschema des Getriebes gemäß Fig. 1;
- Fig. 3: eine beispielhafte erste schematische Bauteilanordnung gemäß der Erfindung;
- Fig. 4: einen Getriebeschnitt des Getriebes gemäß Fig. 3 (in zwei Teilschnitten Fig. 4a und Fig. 4b);
- Fig. 5: einen Sektions-Getriebeschnitt mit einer alternativen Schaltelement-Betätigung
- Fig. 6: einen Schnitt durch eine Antriebswelle
- Fig. 7: eine beispielhafte zweite schematische Bauteilanordnung gemäß der Erfindung;
- Fig. 8: eine beispielhafte dritte schematische Bauteilanordnung gemäß der Erfindung;
- Fig. 9: eine beispielhafte vierte schematische Bauteilanordnung gemäß der Erfindung;
- Fig. 10: eine beispielhafte erste schematische Bauteilanordnung mit nicht koaxialer Anordnung von An- und Abtriebswelle, auf Basis der schematische Bauteilanordnung gemäß Fig. 3;
- Fig. 11: eine beispielhafte zweite schematische Bauteilanordnung, mit nicht koaxialer Anordnung von An- und Abtriebswelle;
- Fig. 12: eine beispielhafte dritte schematische Bauteilanordnung mit nicht koaxialer Anordnung von An- und Abtriebswelle; und
- Fig. 13: eine beispielhafte Variation der schematische Bauteilanordnung gemäß Fig. 3, mit einer modifizierten Koppelung einzelner Radsatzelemente.

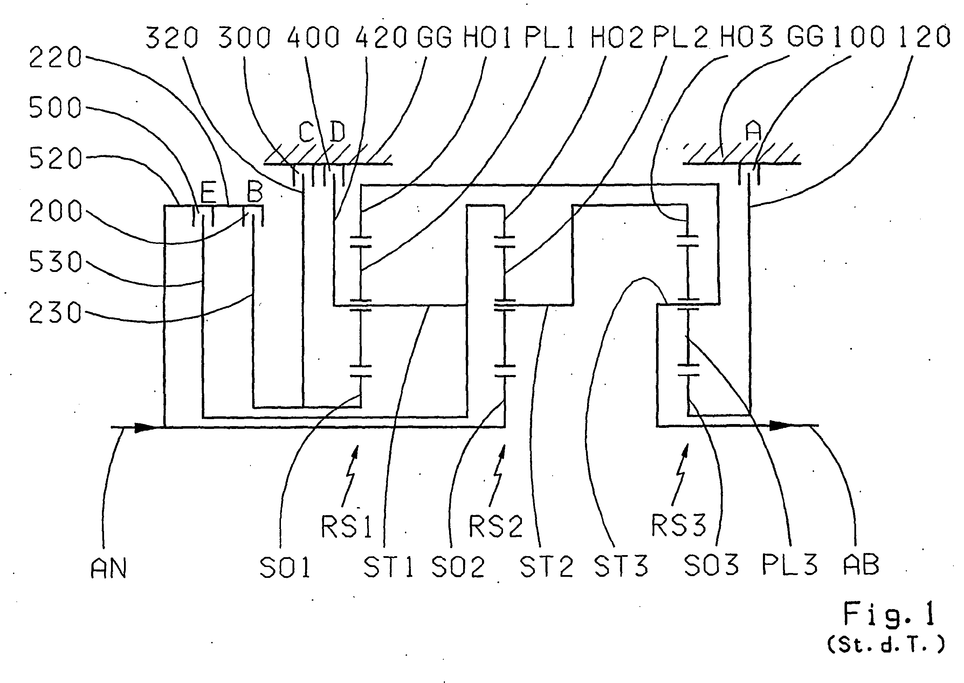

Zur Verdeutlichung der erfindungsgemäßen Bauteileanordnungen ist in Fig. 1 zunächst ein Getriebeschema eines Mehrstufen-Automatgetriebes für ein Kraftfahrzeug mit Standard-Antrieb dargestellt, wie aus dem Stand der Technik der DE 199 12 480 A1 bekannt. Mit AN ist eine Antriebswelle des Automatgetriebe bezeichnet, die mit einem (nicht dargestellten) Antriebsmotor des Automatgetriebes wirkverbunden ist, beispielsweise über einen Drehmomentwandler oder.eine Anfahrkupplung oder einen Torsionsdämpfer oder ein Zweimassenschwungrad oder eine starre Welle. Mit AB ist eine Abtriebswelle des Automatgetriebes bezeichnet, die mit mindestens einer Antriebsachse des Kraftfahrzeugs wirkverbunden ist. In dem dargestellten Ausführungsbeispiel sind Antriebswelle AN und Abtriebswelle AB koaxial zueinander angeordnet. RS1, RS2 und RS3 bezeichnen drei gekoppelte Einfach-Planetenradsätze, die hier nebeneinander in Reihe in einem Getriebegehäuse GG angeordnet sind. Alle drei Planetenradsätze RS1, RS2, RS3 weisen jeweils ein Sonnenrad SO1, SO2 und SO3, jeweils ein Hohlrad HO1, HO2 und HO3, sowie jeweils einen Steg ST1, ST2 und ST3 mit Planetenrädern PL1, PL2 und PL3, die jeweils mit Sonnen- und Hohlrad des entsprechenden Radsatzes kämmen, auf. Mit A bis E sind fünf Schaltelemente bezeichnet, wobei das erste, dritte und vierte Schaltelement A, C, D als Bremse und das zweite und vierte Schaltelement B, E als Kupplung ausgeführt sind. Die jeweiligen Reibbeläge der fünf Schaltelemente A bis E sind als Lamellenpakete 100, 200, 300, 400 und 500 (jeweils mit Außen- und Innenlamellen bzw. Stahl-und Belaglamellen) angedeutet. Die jeweiligen Eingangselemente der fünf Schaltelemente A bis E sind mit 120, 220, 320, 420 und 520 bezeichnet, die jeweiligen Ausgangselemente der Kupplungen B und E mit 230 und 530. Die kinematische Anbindung der einzelnen Radsatzelemente und Schaltelemente relativ zueinander und relativ zu Antriebs- und Abtriebswelle wurde bereits eingangs detailliert beschrieben, ebenso die räumliche Anordnung dieser Bauelemente.

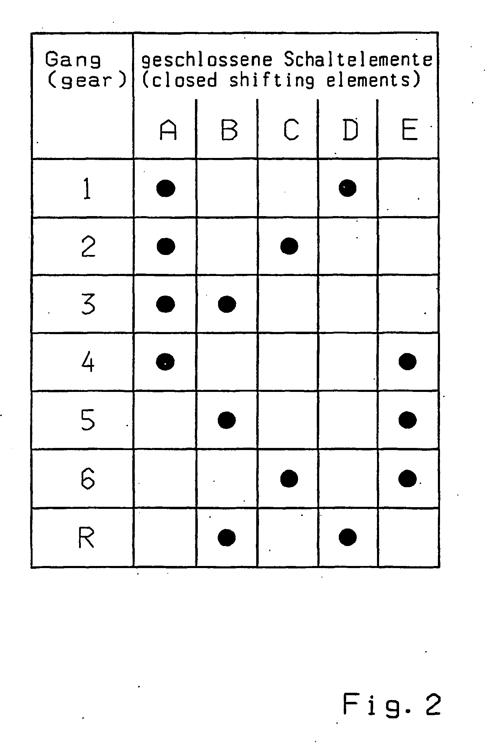

Wie aus dem Schaltschema in Fig. 2 ersichtlich, sind durch selektives Schalten von jeweils zwei der fünf Schaltelemente A bis E sechs Vorwärtsgänge gruppenschaltungsfrei schaltbar, also derart, daß zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird. In dem ersten Gang "1" sind die Bremsen A und D geschlossen, in dem zweiten Gang "2" die Bremsen A und C, in dem dritten Gang "3" Bremse A und Kupplung B, in dem vierten Gang "4" Bremse A und Kupplung E, in dem fünften Gang "5" die Kupplungen B und E, und in dem sechsten Gang "6" Bremse C und Kupplung E. In einem Rückwärts-gang "R" sind Kupplung B und Bremse D geschlossen.

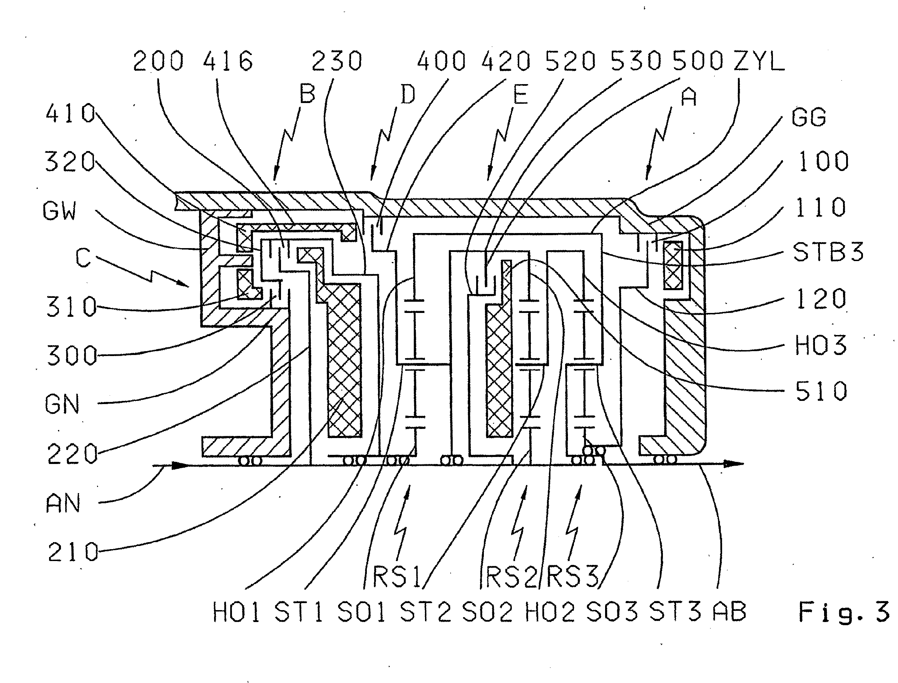

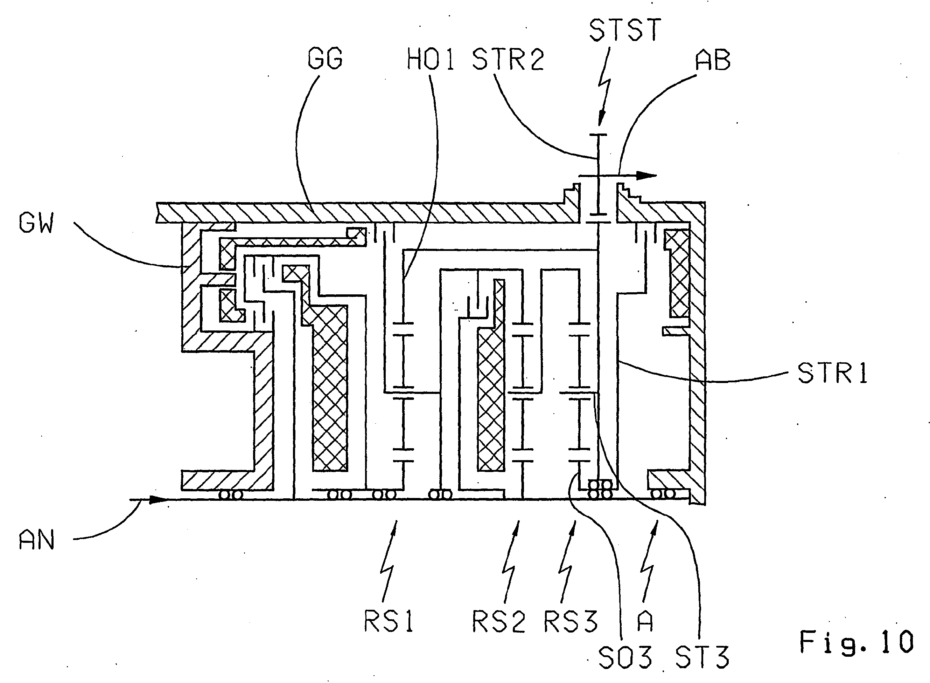

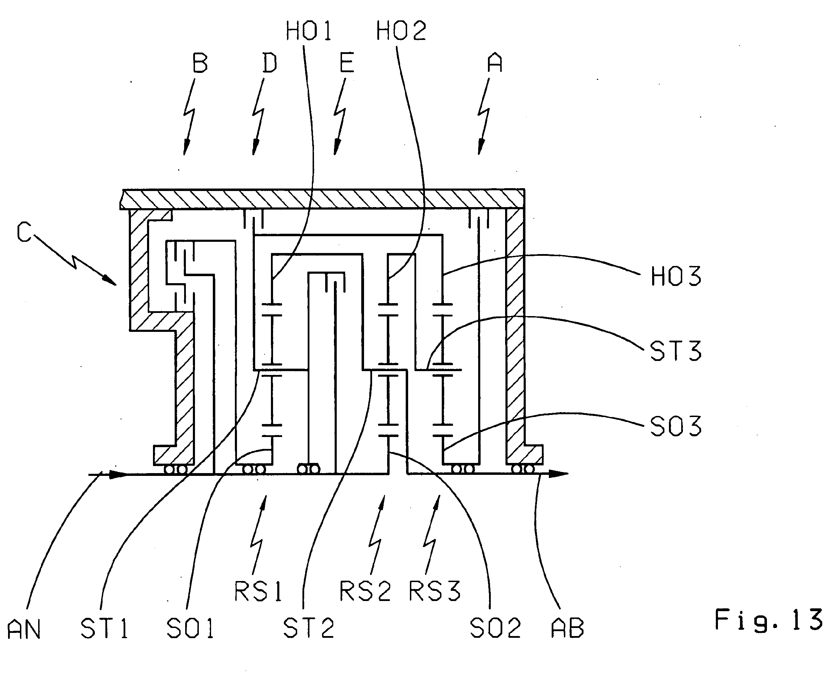

Anhand der Figuren 3 bis 9 werden im folgenden nun vier Beispiele für eine erfindungsgemäße Bauteilanordnung im Detail erläutert, anhand der Figuren 10 bis 12 drei beispielhafte Bauteilanordnungen in Verbindung mit nicht koaxialer Anordnung von Antriebs- und Abtriebswelle, sowie anhand Figur 13 eine Variation zur Koppelung einzelner Planetenradsatz-Elemente miteinander.

Fig. 3 zeigt nun eine erste schematische Bauteilanordnung, beispielhaft für die erfindungsgemäße Lösung der Aufgabe. Ausgehend vom zuvor beschriebenen Stand der Technik der DE 199 12 480 A1 weist das erfindungsgemäße Mehrstufen-Automatgetriebe drei koaxial zueinander angeordnete gekoppelte Einzel-Planetenradsätze RS1, RS2, RS3 auf. Räumlich gesehen ist der zweite Planetenradsatz RS2 axial zwischen dem ersten und zweiten Planetenradsatz RS1, RS3 angeordnet und grenzt dabei axial unmittelbar an den dritten Planetenradsatz RS3 an. Weiterhin weist das Mehrstufen-Automatgetriebe fünf Schaltelemente A bis E auf. Das erste, dritte und vierte Schaltelement A, C, D ist jeweils als Bremse (im Beispiel jeweils als Lamellenbremse) ausgebildet, das zweite und fünfte Schaltelemenet B, E jeweils als Kupplung (im Beispiel jeweils als Lamellenkupplung). Ein Sonnenrad SO3 des dritten Planetenradsatzes RS3 ist über die Bremse A an einem Getriebegehäuse GG des Mehrstufen-Automatgetriebes festsetzbar. Eine Antriebswelle AN des Mehrstufen-Automatgetriebes ist ständig mit einem Sonnenrad SO2 des zweiten Planetenradsatzes RS2 verbunden. Weiterhin ist die Antriebswelle AN über die Kupplung B mit einem Sonnenrad SO1 des ersten Planetenradsatzes RS1 und zusätzlich oder alternativ über die Kupplung E mit einem Steg ST1 des ersten Planetenradsatzes RS1 verbindbar. Alternativ ist das Sonnenrad SO1 des ersten Planetenrad-satzes RS1 über die Bremse C und/oder der Steg ST1 des ersten Planetenradsatzes RS1 über die Bremse D an dem Getriebegehäuse GG festsetzbar.

Eine Abtriebswelle AB des Mehrstufen-Automatgetriebes ist ständig mit einem Hohlrad HO1 des ersten Planetenradsatzes RS1 verbunden, wobei dieses Hohlrad HO1 bei der dargestellten beispielhaften Koppelung der Radsatzelemente zusätzlich ständig mit einem Steg ST3 des dritten Planetenradsatzes RS3 verbunden ist. Weiterhin ist ein Steg ST2 des zweiten Planetenradsatzes RS2 ständig mit einem Hohlrad HO3. des dritten Planetenradsatzes RS3 verbunden, sowie der Steg ST1 des ersten Planetenradsatzes RS1 ständig mit einem Hohlrad HO2 des zweiten Planetenradsatzes RS2. Das entsprechende Verbindungselement zwischen dem Hohlrad HO1 des ersten Planetenradsatzes RS1 und dem Steg ST3 des dritten Planetenradsatzes RS3 ist als Zylinder ZYL ausgebildet. Dieser Zylinder ZYL ist einerseits mit dem Hohlrad HO1 über eine geeignete Wirkverbindung verbunden, beispielsweise über eine.Schweißverbindung, und erstreckt sich in axialer Richtung von dem Hohlrad HO1 bis über das Hohlrad HO3 hinüber. Andererseits ist der Zylinder ZYL auf der dem zweiten Planetenradsatz RS2 abgewandten Seite des dritten Planetenradsatzes RS3 über eine geeignete Wirkverbindung mit einem Stegblech STB3 des Stegs ST3 verbunden, beispielsweise über ein Mitnahmeprofil. Der Zylinder ZYL übergreift den zweiten und dritten Planetenradsatz RS2, RS3 also vollständig.

Der erste Planetenradsatz RS1 wird in axialer Richtung nur von der Antriebswelle AN zentrisch vollständig durchgriffen. Auch der zweite, räumlich gesehen mittlere Planetenradsatz RS2 wird nur von der Antriebswelle AN in axialer Richtung zentrisch durchgriffen. Zur Erzelung einer günstigen Lagerung von Antriebs- und Abtriebswelle. AN, AB im Bereich des dritten Planetenradsatzes RS3 erstreckt sich die Antriebswelle AN axial bis unter das Sonnenrad SO3 des dritten Planetenradsatzes RS3. Die Abtriebswelle AB ist in diesem Bereich radial auf der Antriebswelle AN gelagert, wobei die mit dem Hohlrad HO1 des ersten Planetenradsatzes RS1 wirkverbundene Abtriebswelle AB den dritten Planetenradsatz RS3 in axialer Richtung vollständig durchgreift. Das Sonnenrad SO3 des dritten Planetenradsatzes RS3 wiederum ist auf der Abtriebswelle AB gelagert.

Die Kupplung E, über welche die Antriebswelle AN mit dem Steg ST1 des ersten Planetenradsatzes RS1 verbindbar ist, ist räumlich gesehen zwischen dem ersten und zweiten Planetenradsatz RS1, RS2 angeordnet. Wie in Fig. 3 angedeutet, sind die Innenlamellen des Lamellenpaketes 500 der Kupplung E hier beispielhaft als Stahllamellen ausgeführt, die Außenlamellen des Lamellenpaketes 500 der Kupplung E entsprechend als Belaglamellen.

Ein Eingangselement 520 der Kupplung E ist dabei als Innenlamellenträger ausgebildet und mit der Antriebswelle AN verbunden. Entsprechend ist ein Ausgangselement 530 der Kupplung E als Außenlamellenträger ausgebildet, der sowohl mit dem Hohlrad HO2 des zweiten Planetenradsatzes RS2 als auch mit dem Steg ST1 des ersten Planetenradsatzes RS1 verbunden ist. In dem dargestellten Beispiel ist dieser Außenlamellenträger (530) der Kupplung E als ein Zylinder ausgebildet, der auf einer Seite mit dem Hohlrad HO2 des zweiten Planetenradsatzes RS2 und auf der anderen Seite mit dem Steg ST1 des ersten Planetenradsatzes RS1 verbunden ist, und innerhalb dessen das Lamellenpaket 500 der Kupplung E angeordnet ist. Die mit dem vollen Antriebsdrehmoment eines mit der Antriebswelle AN wirkverbundenen (zur Vereinfachung in Fig. 3 nicht dargestellten) Antriebsmotors des Automatgetriebes belasteten Lamellen 500 der Kupplung E sind in vorteilhafter Weise auf einem großen Durchmesser radial unterhalb des Zylinders ZYL angeordnet. Eine Servoeinrichtung 510 der Kupplung E zur Betätigung der Lamellen 500 grenzt axial unmittelbar an den zweiten Planetenradsatz RS2 an und betätigt die Lamellen 500 axial in Richtung des ersten Planetenradsatzes RS1. Dabei ist diese Servoeinrichtung 510 über den Innenlamellenträger (520) der Kupplung E an der Antriebswelle AN gelagert und rotiert stets mit der Drehzahl der Antriebswelle AN. Selbstverständlich kann die Servoeinrichtung des fünften Schaltelementes auch direkt auf der Antriebswelle gelagert sein.

Die Bremse D, über die der Steg ST1 des ersten Planetenradsatzes RS1 festsetzbar ist, die Bremse C, über die das Sonnenrad SO1 des ersten Planetenradsatzes RS1 festsetzbar ist, sowie die Kupplung B, über welche das Sonnenrad SO1 des ersten Planetenradsatzes RS1 mit der Antriebswelle AN verbindbar ist, sind auf der Seite des ersten Planetenradsatzes RS1 angeordnet, die der Kupplung E gegenüber liegt.

Ein Eingangselement 220 der Kupplung B ist dabei als Innenlamellenträger ausgebildet und mit der Antriebswelle AN verbunden. Entsprechend ist ein Ausgangselement 230 der Kupplung B als Außenlamellenträger ausgebildet, der sowohl mit dem Sonnenrad SO1 des ersten Planetenrad-satzes RS1 als auch mit einem Eingangselement 320 der Bremse C verbunden ist. In dem dargestellten Beispiel ist dieser Außenlamellenträger (230) der Kupplung B als ein entgegengesetzt zum ersten Planetenradsatzes RS1 hin offener Zylinder ausgebildet, dessen Zylinderboden teilweise axial an den ersten Planetenradsatz RS1 und teilweise axial an ein als Innenlamellenträger ausgebildetes Eingangselement 420 der Bremse D angrenzt, mit dem Sonnenrad SO1 verbunden ist und auf der Antriebswelle AN gelagert ist. Innerhalb des Außenlamellenträgers (230) der Kupplung B, radial unterhalb eines Zylindermantels dieses Außenlamellenträgers (230), sind ein Lamellenpaket 200 mit Außen- und Belaglamellen der Kupplung B und eine Servoeinrichtung 210 der Kupplung B angeordnet. Die Servoeinrichtung 210 betätigt die Lamellen 200 in zum ersten Planetenradsatz RS1 entgegengesetzter Richtung. Bedingt durch das Radsatzkonzept ist die Kupplung B thermisch sehr hoch belastet, da sie mit dem vollen Antriebsdrehmoment des mit der Antriebswelle AN wirkverbundenen Antriebsmotors des Automatgetriebes belastet ist und eine vergleichsweise hohe DifferenzDrehzahl zu schalten hat. Entsprechend vorteilhaft ist die Anordnung der Lamellen 200 der Kupplung B auf einem großen Durchmesser. Das als Belaglamellenträger ausgebildete Eingangselement 320 der Bremse C ist auf der dem ersten Planetenradsatz RS1 abgewandten Seite der Lamellen 200 mit dem Außenlamellenträger (230) der Kupplung B verbunden, wobei diese Wirkverbindung beispielsweise als Mitnahmeprofil ausgebildet sein kann, insbesondere mit gleicher Profilteilung wie die Lamellenmitnahmeverzahnung des Außenlamellenträgers der Kupplung B.

Ein Lamellenpaket 300 mit Stahl- und Belaglamellen der Bremse C ist baulängensparend zumindest weitgehend in axialer Richtung radial unterhalb des Lamellenpaketes 200 der Kupplung B angeordnet, also räumlich gesehen innerhalb eines Kupplungsraumes des Kupplung B, der durch den Außenlamellenträger (230) der Kupplung B gebildet wird. Dabei grenzt das Lamellenpaket 300 axial unmittelbar an den Innenlamellenträger (220) der Kupplung B an, auf dessen der Servoeinrichtung 210 bzw. dem ersten Planetenradsatz RS1 abgewandter Seite. Ein Lamellenträger zur Aufnahme Stahllamellen der Bremse C ist in einfacher Weise in eine Gehäusewand GW, die eine Außenwand des Getriebegehäuses GG bildet, integriert, radial oberhalb einer sich in den Innenraum des Getriebegehäuses GG erstreckende Nabe GN dieser Gehäusewand GW. Dabei ist die Gehäusewand GW mit dem Getriebegehäuse GG verbunden, beispielsweise verschraubt. Selbstverständlich können Gehäusewand GW und Nabe GN auch als separate, miteinander verbundene Bauelemente ausgeführt sein. Ebenso können Gehäusewand GW und Getriebegehäuse GG einstückig ausgeführt sein. Wie in Fig. 3 ersichtlich, ist das Eingangselement 320 der Bremse C derart ausgebildet, daß die Belaglamellen des Lamellenpaketes 300 an derem Außendurchmesser von dem Belaglamellenträger (320) der Bremse C aufgenommen werden.

Eine Servoeinrichtung 310 der Bremse C ist in einfacher Weise in die Gehäusewand GW integriert, zweckmäßigerweise radial oberhalb der Nabe GN, und betätigt die Lamellen 300 der Bremse C axial in Richtung des ersten Planetenradsatzes RS1. Hierzu weist die Gehäusewand GW einen entsprechenden Kolbenraum (Druckraum) und einen darin verschiebbar gelagerten druckbeaufschlagbaren Kolben der Servoeinrichtung 310 auf, sowie eine entsprechende (hier nicht dargestellte) Druckmittelzufuhr zu diesem Kolbenraum.

Ebenfalls in die Gehäusewand GW integriert ist eine Servoeinrichtung 410 der Bremse D, räumlich gesehen radial oberhalb der Servoeinrichtung 310 der Bremse C. Die Gehäusewand GW weist also auch einen entsprechenden Kolbenraum (Druckraum) und einen darin verschiebbar gelagerten druckbeaufschlagbaren Kolben der Servoeinrichtung 410 auf, sowie eine entsprechende (hier nicht dargestellte) Druckmittelzufuhr zu diesem Kolbenraum. Zur Betätigung der Lamellen 400 der Bremse D weist die Servoeinrichtung 410 zusätzlich einen Betätigungs-Stempel 416 auf, der die Lamellen 200 der Kupplung B vollständig und die Servoeinrichtung 210 der Kupplung B teilweise in axialer Richtung gesehen radial übergreift und eine Kolbenkraft der Servoeinrichtung 410 auf die Lamellen 400 der Bremse D überträgt. Als dünnwandiger Zylinder ausgeführt, beeinträchtigt dieser Betätigungs-Stempel 416 der Servoeinrichtung 410 den radialen Bauraum der Kupplung B nicht nennenswert.

Die Integration beider Servoeinrichtungen 310, 410 in die Gehäusewand GW ermöglicht eine sehr einfache Druckmittelzufuhr zu diesen beiden Bremsen C und D, sowie eine einfache, für den Montageablauf kostengünstige Baugruppen-Vormontage. Durch die besondere Ausbildung der Servoeinrichtung 410 mit dem Betätigungs-Stempel 416 wird eine verbesserte Montierbarkeit der Bremse D und der (vormontierten) Kupplung B im Getriebegehäuse GG an dem ersten Planetenradsatz RS1 erzielt, ohne auf einen möglichst großen Durchmesser für die Lamellen 200 der thermisch hoch belasteten Kupplung B zu verzichten, und ohne auf einen möglichst großen Durchmesser für die Lamellen 400 der statisch von allen fünf Schaltelementen am höchsten belasteten Bremse D zu verzichten.

Wie in Fig. 3 ersichtlich, ist die benachbart zum ersten Planetenradsatz RS1 angeordnete Servoeinrichtung 210 des zweiten Schaltelementes B näher am ersten Planetenradsatz RS1 angeordnet als die komplette Servoeinrichtung 310 des dritten Schaltelementes C und als der Druckraum der Servoeinrichtung 410 des vierten Schaltelementes D. Ebenso sind die Lamellen 400 des vierten Schaltelementes D näher an dem ersten Planetenradsatz RS1 angeordnet als die Lamellen 200 des zweiten Schaltelementes B. In einer anderen Ausgestaltung kann aber auch vorgesehen sein, daß die Lamellen des zweiten Schaltelementes näher an dem ersten Planetenradsatz angeordnet sind als die Lamellen des vierten Schaltelementes, wobei dann die Lamellen des dritten und vierten Schaltelementes benachbart zur Gehäuseaußenwand angeordnet und die Servoeinrichtungen des dritten und vierten Schaltelementes in diese Gehäuseaußenwand integriert sind, und wobei dann die Lamellen des dritten Schaltelementes radial unterhalb der Lamellen des vierten Schaltelementes angeordnet sind.

Wie in Fig. 3 ebenfalls ersichtlich, ist die Bremse A, über die das Sonnenrad SO3 des dritten Planetenradsatzes RS3 festsetzbar ist, räumlich gesehen auf der dem zweiten Planetenradsatz RS2 abgewandten Seite des dritten Planetenradsatzes RS3 angeordnet. Dabei grenzt ein als Innenlamellenträger ausgebildetes Eingangselement 120 der Bremse A axial an den Steg ST3 des dritten Planetenradsatzes RS3 an, auf dessen dem zweiten Planetenradsatz RS2 abgewandten Seite. Ein Lamellenpaket 100 der Bremse A mit Außen- und Belaglamellen ist auf großem Durchmesser im Bereich der dem dritten Planetenradsatzes RS3 abgewandten Außenwand des Getriebegehäuses GG angeordnet. Ein Mitnahmeprofil für die Außenlamellen des Lamellenpaketes 100 kann in einfacher Weise in das Getriebegehäuse GG integriert sein. Selbstverständlich kann für die Bremse A aber auch ein separater Außenlamellenträger vorgesehen sein, der über geeignete Mittel mit dem Getriebegehäuse GG form-, kraft-oder stoffschlüssig verbunden ist. Eine Servoeinrichtung 110 der Bremse A zur Betätigung der Lamellen 100 ist in einfacher Weise in die Außenwand des Getriebegehäuses GG integriert und betätigt die Lamellen 100 axial in Richtung der drei Planetenradsätze RS1, RS2, RS3, wobei diese Außenwand selbstverständlich auch als ein Gehäusedeckel ausgebildet sein kann, der mit dem Getriebegehäuse GG verbunden, beispielsweise verschraubt ist. Hierzu weist das Getriebegehäuse GG einen entsprechenden Kolbenraum (Druckraum) und einen darin verschiebbar gelagerten druckbeaufschlagbaren Kolben der Servoeinrichtung 110 auf, sowie eine entsprechende (hier nicht dargestellte) Druclanittelzufuhr zu diesem Kolbenraum. Die Kupplung A wird also vollständig von der Abtriebswelle AB in axialer Richtung zentrisch durchgriffen.

Durch die in Fig. 3 dargestellte Bauteilanordnung wird ein räumlich gesehen insgesamt sehr schlanker, kompakter Getriebeaufbau erzielt, der sich besonders für eine Anwendung in einem Kraftfahrzeug mit Standardantrieb eignet, wobei der in Fig. 3 zur Vereinfachung nicht dargestellte, mit der Antriebswelle AN wirkverbundene Antriebsmotor des Automatgetriebes auf der Seite der Schaltelemente B, C, D angeordnet ist, die dem ersten Planetenradsatzes RS1 gegenüber liegt, und wobei die Kupplung A entsprechend auf der Abtriebsseite des Automatgetriebes angeordnet ist.

Das Schaltschema des Mehrstufen-Automatgetriebes gemäß Fig. 3 entspricht dem in Fig. 2 dargestellten Schaltschema. Wie beim Stand der Technik der DE 199 12 480 A1 sind durch selektives Schalten von jeweils zwei der fünf Schaltelemente also sechs Vorwärtsgänge gruppenschaltungsfrei schaltbar.

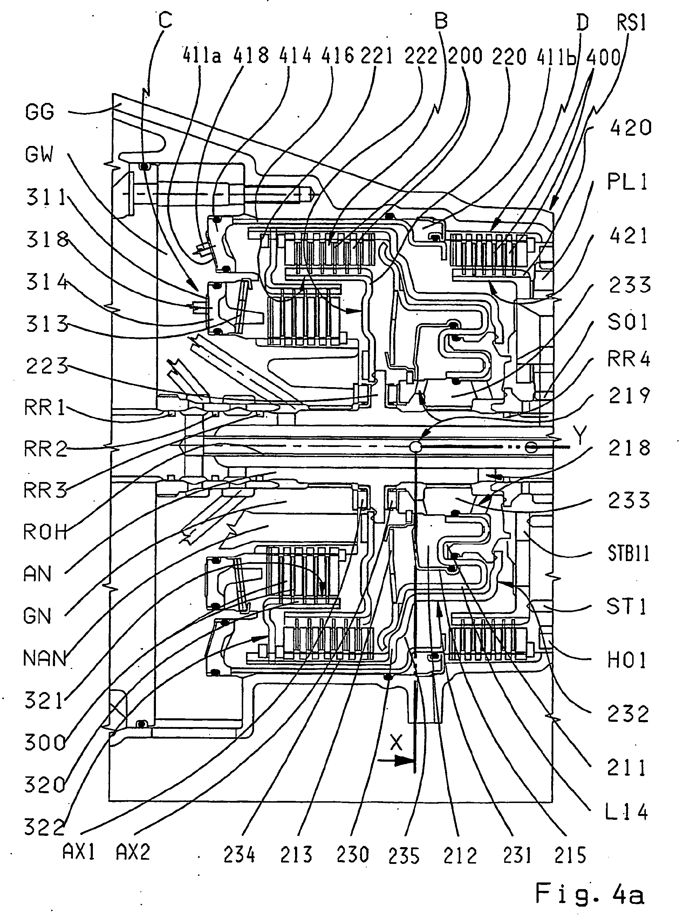

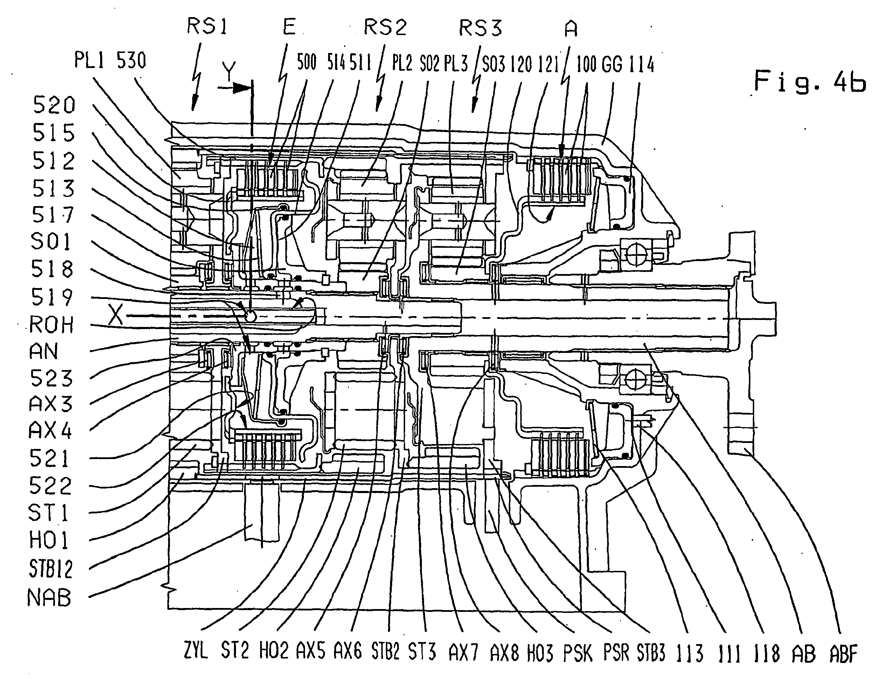

Anhand Fig. 4 wird nun eine praktisch ausgeführte Getriebekonstruktion erläutert, bei der die kinematische Koppelung und die räumliche Anordnung der drei Einzel-Planetenradsätze RS1, RS2, RS3 und der fünf Schaltelemente A bis E innerhalb des Getriebegehäuses GG und relativ zueinander im Prinzip der in Fig. 3 schematisch dargestellten Skizze entspricht. Entsprechend der in diesem Beispiel koaxialen Anordnung von Antriebs- und Abtriebswelle AN, AB ist das Automatgetriebe für ein Kraftfahrzeug mit Standard-antrieb vorgesehen. Zur besseren Darstellung ist der Getriebeschnitt in zwei Teilschnitten auf zwei Figuren Fig. 4a und Fig. 4b aufgeteilt, wobei der dem (nicht dargestellten) Antriebsmotor zugewandte Teil des Automatgetriebes in Fig. 4a und der abtriebsseitige Teil des Automat-getriebes in Fig. 4b abgebildet ist.

Wie in Fig. 4a ersichtlich, ist eine Gehäusewand GW mit dem Getriebegehäuse GG verschraubt und bildet eine Außenwand in Richtung eines (nicht dargestellten) Antriebsmotors bzw. in Richtung eines eventuell vorhandenen, außerhalb des Getriebegehäuses GG angeordneten Anfahrelementes (beispielsweise ein Drehmomentwandler oder eine Anfahrkupplung) des Automatgetriebes. Diese Gehäusewand GW weist im einzelnen nicht näher erläuterte Druckmittelkanäle auf und kann beispielsweise auch eine Ölpumpe zur Druck- und Schmiermittelversorgung des Automatgetriebes aufnehmen. Axial in Richtung Innenraum des Getriebegehäuses GG erstreckt sich eine Nabe GN der Gehäusewand GW. In einer anderen Ausgestaltung kann diese Nabe GN beispielsweise auch als Leitradwelle eines Drehmomentwandlers ausgebildet sein. Radial innerhalb der Nabe GN verläuft die Antriebswelle AN des Automatgetriebes und durchdringt dabei die Gehäusewand GW zentrisch.

In axialer Richtung gesehen radial oberhalb der Nabe GN ist das Lamellenpaket 300 mit Stahl- und Belaglamellen der Bremse C angeordnet, wobei die Nabe GN die Funktion eines Lamellenträgers für die Stahllamellen des Lamellenpaketes 300 wahrnimmt und hierzu ein entsprechendes Lamellenmitnahmeprofil aufweist, welches in ein korrespondierendes Innenprofil am Innendurchmesser dieser Stahllamellen eingreift. Die Servoeinrichtung 310 der Bremse C ist in der Gehäusewand GW integriert. Hierzu weist die Gehäusewand GW einen entsprechenden Kolben- bzw. Druckraum 311 auf, sowie entsprechende Druckmittelkanäle 318 zu diesem Druckraum 311. In diesem Kolbenraum ist ein druckbeaufschlagbarer Kolben 314 der Servoeinrichtung der Bremse C verschiebbar gelagert. Bei einer Druckbeaufschlagung des Druckraums 311 betätigt dieser Kolben 314 die Lamellen 300 der Bremse C gegen eine Rückstellkraft eines Rückstellelementes 313 axial in Richtung des Getriebegehäuse-Innenraums. Das Rückstellelement 313 wird hier beispielhaft durch zwei in Reihe wirkende Tellerfedern gebildet.

In Richtung des Getriebegehäuse-Innenraums gesehen, ist die Kupplung B benachbart zur Bremse C angeordnet. Dabei ist das Lamellenpaket 200 mit Außen- und Belaglamellen der Kupplung B in axialer Richtung gesehen zumindest weitgehend radial oberhalb der Lamellen 300 der Bremse C angeordnet und die Servoeinrichtung der Kupplung B axial neben dem Lamellenpaket 300 der Bremse C. Das Eingangselement 220 der Kupplung B ist als Innenlamellenträger ausgebildet. Ein scheibenförmiger Abschnitt 223 dieses Eingangselementes 220 grenzt axial unmittelbar an das Lamellenpaket 300 an, ist über eine Nabe 223 mit der Antriebswelle AN formschlüssig verbunden und erstreckt sich radial nach außen bis zu einem Durchmesser, der größer ist als der Außendurchmesser der Lamellen 300 der Bremse C. Ein zylindrischer Abschnitt 221 dieses Eingangselementes 220 schließt sich an den Außendurchmesser des scheibenförmigen Abschnitts 223 an, erstreckt sich axial in Richtung der Gehäusewand GW und weist ein Mitnahmeprofil für die Belaglamellen des Lamellenpaketes 200 der Kupplung B auf.

Das Ausgangselement 230 der Kupplung B ist als Außenlamellenträger ausgebildet, in Form eines in Richtung Gehäusewand GW hin geöffneten Topfes, innerhalb dessen die komplette Servoeinrichtung der Kupplung B und das Lamellenpaket 200 der Kupplung B angeordnet ist. Eine Nabe 233 dieses Außenlamellenträgers (230) ist auf der Antriebswelle AN gelagert und auf seiner der Gehäusewand GW abgewandten Seite mit dem Sonnenrad SO1 des ersten Planetenradsatzes RS1 verbunden. Axial angrenzend an ein der Gehäusewand GW zugewandtes erstes Stegblech STB11 des Stegs des ersten Planetenradsatzes RS1 schließt sich ein erster scheibenförmiger Abschnitt 232 des Ausgangselementes 230 an diese Nabe 233 an und erstreckt sich radial nach außen bis zu einem Durchmesser, der etwa geringer ist als der Innendurchmesser des Hohlrads HO1 des ersten Planetenrad satzes RS1. An den Außendurchmesser dieses ersten scheibenförmigen Abschnitts 232 schließt sich ein erster zylinder-förmiger Abschnitt 231 des Ausgangselementes 230 an und erstreckt sich axial in Richtung der Gehäusewand GW bis in den der Gehäusewand GW zugewandten (vorderen) Bereich der Nabe 233. Anschließend schließt sich an diesen ersten zylinderförmigen Abschnitt 231 ein zweiter scheibenförmiger Abschnitt 235 des Ausgangselementes 230 an, der sich radial nach außen erstreckt bis zu einem Durchmesser, der etwa dem Außendurchmesser des Lamellenpaketes 200 der Kupplung B entspricht. An den Außendurchmesser dieses zweiten scheibenförmigen Abschnitts 235 schließt sich ein zweiter zylinderförmiger Abschnitt 234 des Ausgangselementes 230 an, der ein entsprechendes Mitnahmeprofil zur Aufnahme der Außenlamellen der Kupplung B aufweist und sich axial in Richtung der Gehäusewand GW bis über das Lamellenpaket 200 der Kupplung B hinaus erstreckt, also bis in einen Bereich nahe der Gehäusewand GW.

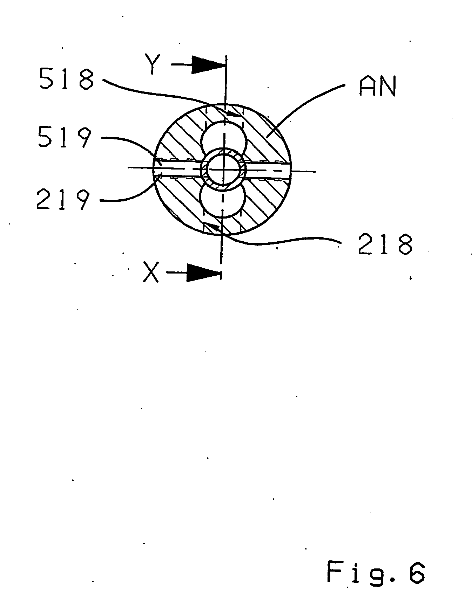

Wie bereits erwähnt, ist innerhalb des zuvor beschriebenen Außenlamellenträgers (230) der Kupplung B die komplette Servoeinrichtung der Kupplung B angeordnet. Hierzu weist die Nabe 233 des Außenlamellenträgers (230) der Kupplung B einen Kolben- bzw. Druckraum 211 für einen in diesem Kolbenraum verschiebbar gelagerten druckbeaufschlagbaren Kolben 215 der Servoeinrichtung der Kupplung B auf, sowie entsprechende Druckmittelkanäle zu diesem Druckraum 211. Bei einer Druckbeaufschlagung des Druckraums 211 betätigt der Kolben 215 die Lamellen 200 der Kupplung B gegen eine Rückstellkraft eines Rückstellelementes 213 (hier beispielhaft eine Tellerfeder) axial in Richtung der Gehäusewand GW, also in zum ersten Planetenradsatz RS1 entgegengesetzter Richtung. Zum Ausgleich eines dynamischen Drucks des stets mit einer Drehzahl des Sonnenrads SO1 des ersten Planetenradsatzes RS1 rotierenden (druckmittelbefüllten) Druckraums 211 weist die Servoeinrichtung der Kupplung B zusätzlich einen Druckausgleichsraum 212 auf, der drucklos mit Schmiermittel befüllt wird. Dieser Druckausgleichsraum 212 grenzt an den Kolben 214 auf dessen dem Druckraum 211 abgewandten Seite an und wird gebildet durch diesen Kolben 214 selbst und eine Stauscheibe 215. Räumlich gesehen sind sowohl der Druckraum 211 als auch der Druckausgleichsraum 212 innerhalb eines Zylinderraums angeordnet, der durch den ersten scheibenförmigen Abschnitt 231 und den ersten zylinderförmigen Abschnitt 232 des Außenlamellenträgers (230) der Kupplung B gebildet wird. Die Druck- und Schmiermittelzufuhr zu dem Druckraum 211 bzw. Druckausgleichsraum 212 erfolgt zentral von der Antriebswelle AN aus über entsprechende Zuführbohrungen 218 bzw. 219. Die Druck- und Schmiermittelführung innerhalb der Antriebswelle AN wird später anhand Fig. 6 noch näher erläutert.

Wie in Fig. 4a weiterhin ersichtlich, weist das als Belaglamellenträger ausgebildete Eingangselement 320 der Bremse C einen zylindrischen Abschnitt 321 mit einem Mitnahmeprofil für die Belaglamellen der Bremse C auf, der sich räumlich gesehen radial unterhalb des zylindrischen Abschnitts 221 des Eingangselementes 220 der Kupplung B erstreckt. Auf der der Gehäusewand GW zugewandten Seite dieses zylindrischen Abschnitts 321 schließt sich ein scheibenförmiger Abschnitt 322 des Eingangselementes 320 der Bremse C an und erstreckt sich oberhalb des Lamellenpaketes 300 der Bremse C radial nach außen, bis zu dem Außenlamellenträger (230) der Kupplung B, mit dem er im Bereich des offenen Endes des zweiten zylindrischen Abschnitts 234 formschlüssig verbunden ist. In fertigungstechnisch vorteilhafter Weise erfolgt diese formschlüssige Verbindung über das gleiche Mitnahmeprofil des Außenlamellenträgers (230) der Kupplung B wie für die Außenlamellen des Lamellenpaketes 200 der Kupplung B. Somit sind auch die Lamellen 300 der Bremse C räumlich gesehen vollständig innerhalb eines durch den Außenlamellenträger der Kupplung B gebildeten Kupplungsraums der Kupplung B angeordnet.

Das Lamellenpaket 400 mit Außen- und Belaglamellen der Bremse D ist in axialer Richtung gesehen zumindest weitgehend radial oberhalb des ersten zylindrischen Abschnitts 231 des Außenlamellenträgers (230) der Kupplung B. Das Getriebegehäuse GG weist in diesem Bereich in fertigungstechnisch vorteilhafter Weise ein Mitnahmeprofil zur Aufnahme der Außenlamellen des Lamellenpaketes 400 auf. Auf diese Weise wird ein möglichst großer Lamellendurchmesser für die Bremse D erzielt, die konzeptbedingt von allen fünf Schaltelementen statisch am höchsten belastet ist. Das an den Außenlamellenträger (230) der Kupplung B angrenzende erste Stegblech STB11 des ersten Planetenradsatzes RS1 bildet gleichzeitig das Eingangselement 420 der Bremse C. Hierzu schließt sich ein zylindrischer Abschnitt 421 dieses als Innenlamellenträger ausgebildeten Eingangselementes 420 an den Außendurchmesser des ersten Stegblechs STB11 an, erstreckt sich axial in Richtung der Gehäusewand GW, und weist ein entsprechendes Mitnahmeprofil zur Aufnahme der Belaglamellen der Bremse D auf.

In der beispielhaften Detailkonstruktion weist die Servoeinrichtung der Bremse D zwei Kolben- bzw. Druckräume 411a und 411b auf, die unabhängig voneinander mit Druck beaufschlagbar sind, sodaß die auf die Lamellen 400 der Bremse D wirkende Betätigungskraft aus dem Differenzdruck beider Druckräume 411 gebildet wird. Der erste Kolben- bzw. Druckraum 411a der Bremse C ist zusammen mit seinen Druckmittelkanälen 418 - in der Gehäusewand GW integriert, auf einem Durchmesser oberhalb des Kolbens 314 der Bremse C, und wirkt auf einen Kolben 414, der in einem entsprechenden Kolbenraum der Gehäusewand GW verschiebbar gelagert ist. Der Kolben 414 wiederum betätigt einen Betätigungs-Stempel 416, der gleichzeitig zusammen mit einem Abschnitt des Getriebegehäuses GG den zweiten Druckraum 411b bildet. Bei einer Druckbeaufschlagung eines der oder beider Druckräume 411a, 411b betätigt der Betätigungs-Stempel 416 die Lamellen 400 der Bremse D axial in Richtung des ersten Planetenradsatzes RS1. Der Betätigungs-Stempel 416 dient also als Wirkverbindung zwischen dem Kolben 415 und dem Lamellenpaket 400, leitet also die Betätigungskraft des Kolbens 415 weiter zu dem Lamellenpaket 400.

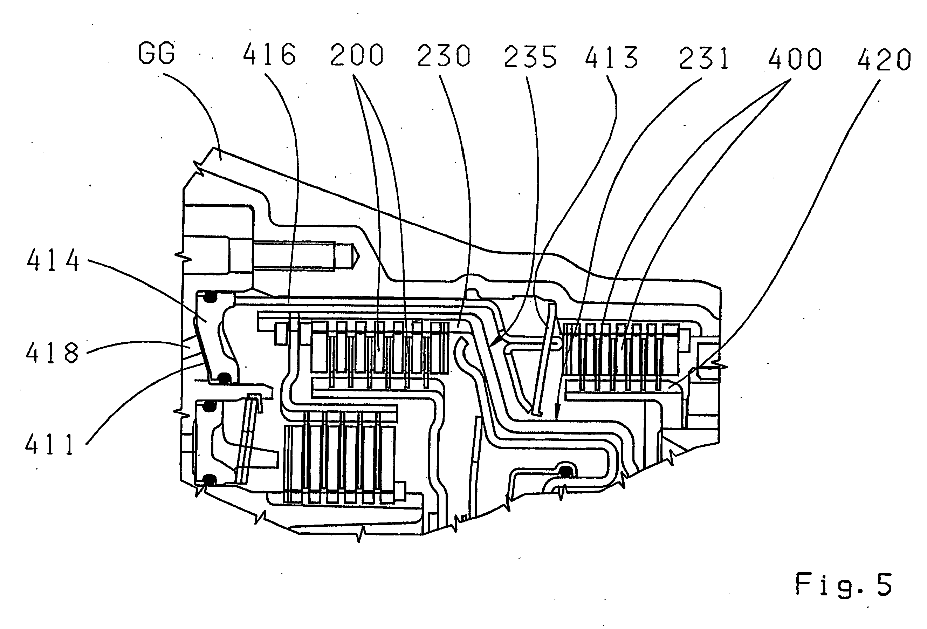

Optional zusätzlich oder auch alternativ zum zweiten Druckraum 411b kann ein Rückstellelement, beispielsweise eine Tellerfeder vorgesehen sein, die eine Rückstellkraft für den Kolben 414 der Bremse D erzeugt und sich hierzu einerseits an dem Getriebegehäuse GG und andererseits an dem Betätigungs-Stempel 416 abstützt, wobei der Betätigungs-Stempel 416 dann entsprechende Ausnehmungen des Rückstellelementes in axialer Richtung durchgreift. Eine derartige alternative Detailkonstuktion ist in Fig. 5 als Sektions-Getriebeschnitt dargestellt. Der hier einzige Druckmittelraum der Servoeinrichtung der Bremse D ist mit 411 bezeichnet, das auf den Kolben 414 wirkende und von dem Betätigungs-Stempel 416 durchgriffene Rückstellelement mit 413.

Wie aus Fig. 4a ersichtlich, ist diese Anordnung von Kupplung B und den beiden Bremsen C, D zusammen auf einer Seite des ersten Planetenradsatzes RS1 in Verbindung mit der Integration der Servoeinrichtungen beider Bremsen C, D in die Gehäusewand GW ausgesprochen kompakt. Die gezeigte Anordnung der einzelnen Lamellenpakete 200, 300, 400 ermöglicht eine jeweils günstige Dimensionierung, entsprechend der individuellen statischen und thermischen Belastung dieser drei Schaltelemente B, C, D.

Zusätzlich integriert in die Gehäusewand.GW ist eine Vorrichtung zur Messung einer Drehzahl der Antriebswelle AN. Hierzu ist mindestens ein Drehzahlsensor NAN in eine axiale Bohrung der Gehäusewand GW eingesetzt und tastet eine entsprechend ausgebildete Meßfläche des scheibenförmigen Abschnitts 222 des mit der Antriebswelle AN verbundenen Innenlamellenträgers (220) der Kupplung B axial vorzugsweise berührungslos ab.

Räumlich gesehen schließt sich der erste Planetenradsatz RS1 axial an die Servoeinrichtung der Kupplung B und axial an das Lamellenpaket 400 der Bremse D an. Das Sonnenrad SO1 des ersten Planetenradsatzes RS1 wird nur von der Antriebswelle AN zentrisch durchgriffen.

Wie in Fig. 4b ersichtlich, verlaufen Antriebs- und Abtriebswelle AN, AB zueinander koaxial. Der Steg ST1 des ersten Planetenradsatzes RS1 ist auf seiner dem Getriebeabtrieb zugewandten Seite (also auf der den drei Schaltelementen B, C, D abgewandten Seite) auf der Antriebswelle AN über ein Gleitlager gelagert. In bekannter Weise sind die Planetenräder PL1 auf Planetenbolzen, die in den Steg ST1 (Planetenradträger) eingesetzt sind, drehbar gelagert und kämmen sowohl mit dem Sonnenrad SO1 als auch mit dem Hohlrad HO1 des ersten Planetenradsatzes RS1.

In Richtung Getriebeabtrieb gesehen, schließt sich an den ersten Planetenradsatz RS1 die Kupplung E axial an, an die Kupplung E anschließend der zweite Planetenradsatz RS2, an den zweiten Planetenradsatz RS2 anschließend der dritte Planetenradsatz RS3, an den dritten Planetenradsatz RS3 anschließend die Bremse A, und an die Bremse A schließlich eine Außenwand des Getriebegehäuses GG. Die Kupplung E ist also räumlich gesehen zwischen dem ersten und zweiten Planetenradsatz RS1, RS2 angeordnet, die Bremse A auf der den drei Schaltelementen B, C, D gegenüberliegenden Außenseite des Automatgetriebes.

Im Unterschied zur Kupplung B sind die Innenlamellen eines Lamellenpaketes 500 der Kupplung E als Stahllamellen ausgeführt und die Außenlamellen des Lamellenpaketes 500 der Kupplung E entsprechend als Belaglamellen.

Das Eingangselement 520 der Kupplung E ist als Innenlamellenträger ausgebildet. Ein scheibenförmiger Abschnitt 522 des Eingangselementes 520 ist über eine Nabe 523 formschlüssig mit der Antriebswelle AN verbunden und erstreckt sich - axial unmittelbar angrenzend an den Steg ST1 des ersten Planetenradsatzes RS1 - radial nach außen bis zu einem Durchmesser des Lamellenpaketes 500 der Kupplung E. Im Bereich seines Außendurchmessers schließt sich an diesen scheibenförmigen Abschnitt 522 ein zylindrischer Abschnitt 521 des Eingangselementes 520 an und erstreckt sich axial in Richtung des zweiten Planetenradsatzes RS2. An seinem Außendurchmesser weist dieser zylindrische Abschnitt 521 ein Mitnahmeprofil zur Aufnahme der Stahllamellen des Lamellenpaketes 500 auf.

Die Servoeinrichtung der Kupplung E ist auf der dem zweiten Planetenradsatz RS2 zugewandten Seite des Innernlamellenträgers (520) der Kupplung E in axialer Richtung gesehen radial oberhalb der Nabe 523 angeordnet und umfaßt einen Druckraum 511, einen Druckausgleichsraum 512, einen Kolben 514, eine Stauscheibe 515 sowie ein Rückstellelement 513. Auf der dem zweiten Planetenradsatz RS2 zugewandten Seite dieser Servoeinrichtung ist eine Stützscheibe 517 angeordnet, die auf der Nabe 523 axial in Richtung des zweiten Planetenradsatzes RS2 über einen Sicherungsring festgesetzt und zur Nabe 523 hin (hier beispielsweise über einen O-Ring) öldicht abgedichtet ist. Der Kolben 514 ist axial verschiebbar auf der Nabe 523 und dem Außendurchmesser der Stützscheibe 517 gelagert und sowohl gegen die Nabe 523 als auch gegen den Außendurchmesser der Stützscheibe 517 (hier beispielsweise über jeweils einen O-Ring) öldicht abgedichtet, wobei der Druckraum 511 von Kolben 514 und Stützscheibe 517 gebildet wird und räumlich gesehen auf der dem ersten Planetenradsatz RS1 zugewandten Seite der Stützscheibe 517 angeordnet ist. Die Stauscheibe 515 grenzt axial an den scheibenförmigen Abschnitt 522 des Innenlamellenträgers (520) der Kupplung E an, liegt dabei an einer Schulter der Nabe 523 an, ist gegenüber dem axial verschiebbaren Kolben 514 (hier beispielsweise wieder über einen O-Ring) öldicht abgedichtet und bildet zusammen mit den Kolben 514 auf dessen dem ersten Planetenradsatz RS1 zugewandten Seite den Druckausgleichsraum 512. Zum Ausgleich des dynamischen Druckes des stets mit Drehzahl der Antriebswelle AN (ölbefüllten) rotierenden Druckraums 511 der Kupplung E wird der Druckausgleichsraum drucklos mit Schmiermittel befüllt. Die Druckmittelzufuhr zu dem Druckraum 511 der Kupplung E und die Schmiermittelzufuhr zu dem Druckausgleichsraum 512 der Kupplung E erfolgt über entsprechende Bohrungen der Nabe 523 zentral von der Antriebswelle AN aus, die wiederum hierzu entsprechende Druck- und Schmiermittelführungen 518, 519 aufweist, was später anhand Fig. 6 noch näher erläutert wird. Bei einer Druckbeaufschlagung des Druckraums 511 betätigt der Kolben 514 die Lamellen 500 der Kupplung E axial in Richtung des ersten Planetenradsatzes RS1, gegen eine Rückstellkraft der (hier beispielsweise als Tellerfeder ausgebildeten) Rückstellelementes 513, das zwischen Kolben 515 und Stauscheibe 515 eingelegt oder auch vorgespannt ist.

Das Sonnenrad SO2 des zweiten Planetenradsatzes RS2 ist - axial angrenzend an die Nabe 523 des Eingangselementes 520 der Kupplung E - über ein Mitnahmeprofil formschlüssig mit der Antriebswelle AN verbunden. Dabei durchgreift die Antriebswelle AN das Sonnenrad SO2 in axialer Richtung vollständig. In einer anderen Ausgestaltung kann auch vorgesehen sein, daß das Sonnenrad S02 über die Nabe 532 mit der Antriebswelle AN verbunden ist oder daß die Nabe 532 über das Sonnenrad SO2 mit der Antriebswelle AN verbunden ist, wobei in beiden Fällen konstruktiv eine geeignete form- oder kraftschlüssige Verbindung zwischen Sonnenrad SO2 und Nabe 532 vorzusehen ist. In noch einer anderen Ausgestaltung können Sonnenrad SO2 und Nabe 532 auch einteilig ausgeführt oder miteinander verschweißt sein. In diesem Fall muß zur Montierbarkeit der Servoeinrichtung der Kupplung E entweder die Verbindung zwischen dem scheibenförmigen Abschnitt 522 des Eingangselementes 520 der Kupplung E und Nabe 523 formschlüssig ausgeführt sein ist, oder aber es muß die Anordnung von Servoeinrichtung der Kupplung E und scheibenförmigem Abschnitt 522 in axialer Richtung (und damit auch die Betätigungsrichtung der Lamellen 500) vertäuscht werden.

In bekannter Weise kämmen die Planetenräder PL2 des zweiten Planetenradsatzes RS2 sowohl mit dem Sonnenrad SO2 als auch mit dem Hohlrad HO2 des zweiten Planetenradsatzes RS2 und sind an dem Steg ST2 des zweiten Planetenradsatzes RS2 drehbar gelagert. Auf seiner dem dritten Planetenradsatz RS3 zugewandten Seite weist der Steg ST2 ein Stegblech STB2 auf, das sich radial nach außen erstreckt und an seinem Außendurchmesser mit dem Hohlrad HO3 des dritten Planetenradsatzes RS3 verbunden ist, hier beispielsweise über eine Schweißverbindung. Selbstverständlich kann diese Verbindung in einer anderen Ausgestaltung auch formschlüssig ausgeführt sein, auch können Stegblech STB2 und Hohlrad HO3 einteilig ausgeführt sein.

Das Hohlrad HO2 des zweiten Planetenradsatzes RS2 ist über das Ausgangselement 530 der Kupplung E mit dem Steg ST1 des ersten Planetenradsatzes RS1 verbunden. Dieses Ausgangselement 530 ist als Zylinder ausgebildet, der sich axial von dem Hohlrad HO1 des ersten Planetenradsatzes RS1 bis zum Hohlrad HO2 des zweiten Planetenradsatzes RS2 erstreckt und dabei die Kupplung E in axialer Richtung vollständig übergreift. An seinem Innendurchmesser weist dieser Zylinder ein Mitnahmeprofil zur Aufnahme der Außenlamellen des Lamellenpaketes 500 der Kupplung E auf. Die in Fig. 4b dargestellte beispielhafte einteilige Ausbildung von Hohlrad HO2 und Ausgangselement 530 ist hinsichtlich Montage sehr vorteilhaft. Als dünnwandiges Stahlbauteil ausgeführt, ermöglicht eine derartige Konstruktion des Ausgangselementes 530 zudem die Anordnung der Lamellenpaketes 500 der Kupplung E auf einem vergleichsweise großen Durchmesser. Selbstverständlich können Hohlrad HO2 und Ausgangselement 530 auch als separate Bauelemente ausgeführt sein. Auf seiner dem zweiten Planetenradsatz RS2 zugewandten Seite weist der Steg ST1 des ersten Planetenradsatzes RS1 ein zweites Stegblech STB12 auf, das auf der Antriebswelle AN gelagert ist und sich radial nach außen bis zum Ausgangselement 530 der Kupplung E erstreckt. An seinem Außendurchmesser weist das zweite Stegblech STB12 ein Mitnahmeprofil auf, das in ein korrespondierendes Mitnahmeprofil des Ausgangselementes 530 der Kupplung E eingreift. In fertigungstechnisch.vorteilhafter Weise kann diese formschlüssige Verbindung derart ausgebildet sein, daß das Stegblech STB12 in das Mitnahmeprofil des Ausgangselementes 530 für die Außenlamellen der Kupplung E eingreift.

Der Steg ST3 des dritten Planetenradsatzes RS3 ist sowohl mit der Abtriebswelle AB als auch mit dem Hohlrad HO1 des ersten Planetenradsatzes RS1 verbunden. Als Verbindungselement zwischen Hohlrad HO1 und Steg ST3 ist ein dünnwandiger Zylinder ZYL vorgesehen, der sich in axialer Richtung gesehen radial oberhalb der Kupplung E und der beiden Planetenradsätze RS2, RS3 erstreckt, ausgehend von dem Hohlrad HO1 bis über das Hohlrad HO3 des dritten Planetenradsatzes RS3 hinüber. Der Zylinder ZYL übergreift also sowohl die Kupplung E als auch die beiden Planetenradsätze RS2, RS3 vollständig. In dem in Fig. 4b dargestellten Beispiel ist der Zylinder ZYL mit dem Hohlrad HO1 verschweißt, kann aber selbstverständlich in einer anderen Ausgestaltung beispielsweise auch formschlüssig mit dem Hohlrad HO1 verbunden sein. Auf seiner anderen Seite ist der Zylinder ZYL über ein Mitnahmeprofil mit einem Stegblech STB3 des Stegs ST3 verbunden, das auf der dem zweiten Planetenradsatz RS2 abgewandten Seite des dritten Planetenradsatzes RS3 angeordnet ist. Selbstverständlich kann auch diese Verbindung zwischen Steg ST3 und Zylinder ZYL konstruktiv anders ausgebildet sein, beispielsweise als Schweißverbindung. Die Abtriebswelle AB ist auf der dem zweiten Planetenradsatz RS2 zugewandten Seite des dritten Planetenradsatzes RS3 mit dem Steg ST3 verbunden, wobei die Abtriebswelle AB das Sonnenrad SO3 des dritten Planetenradsatzes RS3 zentrisch vollständig durchgreift und auf der Antriebswelle AN gelagert ist. Im dargestellten Beispiel sind Abtriebswelle AB und Steg ST3 als einteiliges Schmiedebauteil ausgeführt, das auf der dem zweiten Planetenradsatz RS2 abgewandten Seite des dritten Planetenradsatzes RS3 formschlüssig mit einem Abtriebsflansch ABF verbunden ist, der wiederum mit breiter Lagerbasis an der abtriebsseitigen Außenwand des Getriebegehäuses GG gelagert ist.

An dem Außendurchmesser das Stegblechs STB3 des dritten Planetenradsatzes RS3 ist zusätzlich ein Parksperrenrad PSR angeordnet und mit diesem fest verbunden, beispielsweise verschweißt oder auch angeschmiedet. In bekannter Weise weist dieses Parksperrenrad PSR eine Verzahnung auf, in die eine (in Fig. 4b vereinfacht dargestellte) Parksperrenklinke PSK zum Festsetzen der Abtriebswelle AB eingreifen kann. Zur Messung einer Drehzahl und/oder Drehrichtung der Abtriebswelle AB ist an der Außenfläche des Zylinders ZYL eine entsprechende Kontur vorgesehen, die ein entsprechender, mit NAB bezeichneter Drehzahlsensor radial berührungslos abtastet. In einer anderen Ausgestaltung kann die Abtriebsdrehzahl bzw. Abtriebsdrehrichtung auch über die Parksperrenverzahnung gemessen werden. Selbstverständlich können auch zwei derartige Abtriebsdrehzahlsensoren bzw. ein aus zwei Sensoren kombinierter Abtriebsdrehzahlsensor vorgesehen sein, um zusätzlich zur absoluten Drehzahl der Abtriebswelle AB auch deren Drehrichtung zu bestimmen.

Das Sonnenrad SO3 des dritten Planetenradsatzes RS3 ist auf der Abtriebswelle AB gelagert und auf der dem zweiten Planetenradsatz RS2 abgewandten Seite des dritten Planetenradsatzes RS3 mit dem Eingangselement 120 der Bremse A verbunden, im dargestellten Beispiel mittels Schweißverbindung. In einer anderen Ausgestaltung kann das Eingangselement 120 der Bremse A auch in ein entsprechend ausgebildetes Mitnahmeprofil des Sonnenrades SO3 eingehängt sein. Das hier als in Richtung Getriebeabtrieb offener Stahlblechtopf ausgebildete Eingangselement 120 weist an seinem zylindrischen Abschnitt 121 ein Mitnahmeprofil zur Aufnahme von Belaglamellen des Lamellenpaketes 100 der Bremse A auf. Dabei ist dieses Lamellenpaket 100 auf einem vergleichsweise großen Durchmesser angeordnet, räumlich gesehen neben dem Hohlrad HO3 des dritten Planetenradsatzes RS3. Das Getriebegehäuse GG weist in diesem Bereich ein Mitnahmeprofil zur Aufnahme von Außenlamellen des Lamellenpaketes 100 der Bremse A auf, übernimmt also in fertigungs- und montagetechnisch günstiger Weise gleichzeitig die Funktion eines Außenlamellenträgers für die Bremse A. Selbstverständlich kann in einer anderen Ausgestaltung auch ein separater Außenlamellenträger für die Bremse A vorgesehen sein, der dann über geeignete Mittel mit dem Getriebegehäuse verbunden ist.

Die Servoeinrichtung der Bremse A ist in fertigungs-und montagetechnisch günstiger Weise ebenfalls direkt in das Getriebegehäuse GG integriert. Hierzu weist die abtriebsseitige Außenwand des Getriebegehäuses GG einen entsprechenden Kolben- bzw. Druckraum 111 auf, sowie entsprechende Druckmittelkanäle 118 für diesen Druckraum 111. In diesem Kolbenraum ist ein druckbeaufschlagbarer Kolben 114 der Servoeinrichtung der Bremse A verschiebbar gelagert. Bei einer Druckbeaufschlagung des Druckraums 111 betätigt dieser Kolben 114 die Lamellen 100 der Bremse A gegen eine Rückstellkraft eines (hier beispielhaft als Tellerfeder ausgeführtes) Rückstellelementes 113 axial in Richtung des dritten Planetenradsatzes RS3. In einer anderen Ausgestaltung kann auch vorgesehen sein, daß die abtriebsseitige Außenwand der Getriebegehäuses als separater, mit dem Getriebegehäuse verbundener Gehäusedeckel ausgeführt ist, der beispielsweise auch sowohl die Servoeinrichtung der Bremse A als auch die Außenlamellen der Bremse A aufnehmen kann.

Die anhand Fig. 4a und Fig. 4b im Detail erläuterte praktisch ausgeführte Getriebekonstruktion zeichnet sich auch aus durch eine geringe Anzahl von Axiallagern und rotierenden Dichtringen. In besonders vorteilhafter Weise sind insgesamt nur acht mit AX1 bis AX8 bezeichnete Axiallager vorgesehen, mit sogar nur zwei verschiedenen Größen. Weiterhin sind insgesamt nur vier mit RR1 bis RR4 bezeichnete rotierende Dichtringe ("Rechteckringe") erforderlich, um die einzelnen Druck- und Schmiermittelzuführungen gegeneinander und nach außen dynamisch abzudichten. Dabei sind alle vier rotierenden Dichtringe RR1 bis RR4 in entsprechende Nuten der Antriebswelle AN eingelegt und können in vorteilhafter weise geometrisch gleich ausgeführt sein.

Zur Verdeutlichung der Druckmittel- und Schmiermittelführung innerhalb der Antriebswelle AN für die Versorgung der Druck- und Druckausgleichsräume der beiden Kupplungen B und E und für die Schmierung verschiedener Getriebebauelemente zeigt Fig. 6 einen Schnitt durch die Antriebswelle AN, der in Fig. 4a/4b mit X-Y bezeichnet ist. Ein dünnwandiges Rohr ROH ist zentrisch in die Antriebswelle AN öldicht eingesetzt, beispielsweise mittels Preßsitz oder Verklebung. Innerhalb dieses Rohres ROH wird das Schmiermittel geführt, das über in den Innenraum des Rohres ROH mündende Radialbohrungen der Antriebswelle zur Schmierung diverser Bauelemente und zur Befüllung von Druckausgleichsräumen abzweigbar ist. In dem dargestellten Schnitt ist oberhalb der Mittellinie eine durch die Antriebswelle AN radial durchgehende Bohrung der Schmiermittelzuführung 519 zum Druckausgleichsraum des fünften Schaltelementes E sichtbar. In der Axialbohrung der Antriebswelle AN oberhalb des Rohres ROH wird das Druckmittel für die Servoeinrichtung des fünften Schaltelementes E geführt. In diese Axialbohrung mündet die Radialbohrung der Druckmittelzuführung 518 zum Druckraum des fünften Schaltelementes E, die hier gestrichelt dargestellt ist, weil sie in diesem Schnittsegment unsichtbar ist.

Weiterhin ist in dem in Fig. 6 dargestellten Schnitt unterhalb der Mittellinie eine durch die Antriebswelle AN radial durchgehende Bohrung der Schmiermittelzuführung 219 zum Druckausgleichsraum des zweiten Schaltelementes B sichtbar. Unterhalb der Mittellinie gestrichelt dargestellt ist die in diesem Schnittsegment unsichtbare Radialbohrung der Schmiermittelzufuhr zum Druckausgleichsraum des fünften Schaltelementes E. In der Axialbohrung der Antriebswelle AN unterhalb des Rohres ROH wird das Druckmittel für die Servoeinrichtung des zweiten Schaltelementes B geführt. In diese Axialbohrung mündet die Radialbohrung der Druckmittelzuführung 218 zum Druckraum des zweiten Schaltelementes B, die hier gestrichelt dargestellt ist, weil sie in diesem Schnittsegment unsichtbar ist.

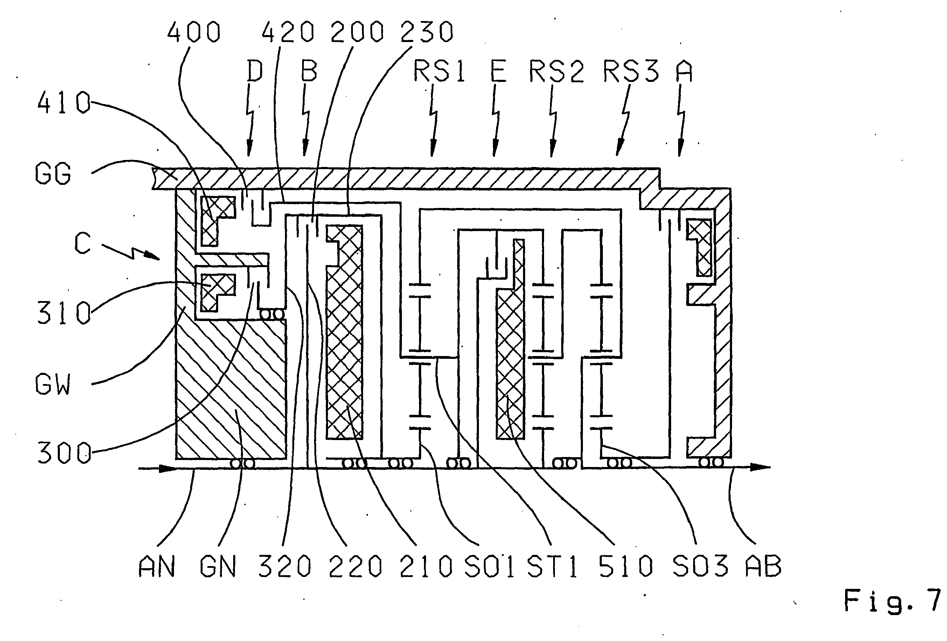

Anhand Fig. 7 wird im folgenden nun eine zweite schematische Bauteilanordnung im Detail erläutert, beispielhaft für die erfindungsgemäße Lösung der Aufgabe. Dabei geht diese zweite erfindungsgemäße Bauteilanordnung von der zuvor anhand Fig. 3 beschriebenen ersten erfindungsgemäßen Bauteilanordnung aus, mit unveränderter kinematischen Koppelung der drei Einzel-Planetenradsätze RS1, RS2, RS2 miteinander, mit den fünf Schaltelementen A bis E sowie mit Antriebs- und Abtriebswelle AN, AB. Die Anordnung von Antriebswelle AN, Abtriebswelle AB, den drei Planetenradsätzen.RS1, RS2, RS3, der Kupplung E als fünftes Schaltelement sowie der Bremse A als erstes Schaltelement entspricht im wesentlichen deren in Fig. 3 dargestellten Anordnung; wobei Detailunterschiede hierzu sich lediglich auf die Lagerung der Servoeinrichtung 510 der Kupplung E und die Lagerung der Antriebswelle AN an der Abtriebswelle AB im Bereich des dritten Planetenradsatzes RS3 beziehen. Im Unterschied zu Fig. 3 ist hier die Servoeinrichtung 510 der Kupplung E direkt auf der Antriebswelle AN gelagert, und die in einem entsprechend ausgeführten Absatz der Abtriebswelle AB gelagerte Antriebswelle AN erstreckt sich in axialer Richtung nunmehr nur noch bis an (und nicht mehr bis unter) das Sonnenrad SO3 des dritten Planetenradsatzes RS3.

Wie in Fig. 7 ersichtlich, ist die räumliche Anordung des als Kupplung ausgebildeten zweiten Schaltelementes B und des jeweils als Bremse ausgebildeten dritten und vierten Schaltelementes C, D auf der dem (nicht dargestellten) Antriebsmotor zugewandten Seite des ersten Planetenradsatzes RS1 gegenüber Fig. 3 modifiziert, insbesondere die räumliche Anordnung des Lamellenpaketes 400 der Bremse D. Gegenüber Fig. 3 unverändert sind dabei Anordnung der Lamellen 300 und der Servoeinrichtung 310 der Bremse C in axialer Richtung gesehen radial oberhalb der Nabe GN der getriebegehäusefesten Gehäusewand GW, die vollständige Integration der Servoeinrichtung 310 der Bremse C in der Gehäusewand GW, die Integration der Servoeinrichtung 410 der Bremse D in der Gehäusewand GW, sowie die Betätigungsrichtungen aller drei Servoeinrichtungen 210, 310, 410 der drei Schaltelemente B, C, D.

Die Kupplung B ist nunmehr - in Richtung des ersten Planetenradsatz RS1 gesehen - axial vollständig neben der Bremse C angeordnet, insbesondere axial neben den Lamellen 300 der Bremse C. Das Eingangselement 220 der Kupplung B ist dabei als Innenlamellenträger ausgebildet und grenzt in dem Bereich, in dem er mit der Antriebswelle AN verbunden ist, axial unmittelbar an die Gehäusewand GW an. Das Ausgangselement 230 der Kupplung B ist - ähnlich wie in Fig. 3 - als zylindrischer Außenlamellenträger ausgebildet, innerhalb dessen das Lamellenpaket 200 und die Servoeinrichtung 210 der Kupplung B angeordnet ist.

Entsprechend der kinematischen Anbindung ist das Eingangselement 320 der Bremse C - wie in Fig. 3 - über das Ausgangselement 230 der Kupplung B mit dem Sonnenrad SO1 des ersten Planetenradsatzes RS1 verbunden. Das Eingangselement 320 ist als Innenlamellenträger ausgebildet, nunmehr auf der Nabe GN der Gehäusewand GW gelagert und nimmt Belaglamellen des Lamellenpaketes 300 nunmehr an einem Innendurchmesser dieser Belaglamellen auf. Ein entsprechender Außenlamellenträger der Bremse C zur Aufnahme der Außenlamellen des Lamellenpaketes 300 an derem Außendurchmesser ist in dem in Fig. 7 dargestellten Beispiel in der getriebegehäusefesten Gehäusewand GW integriert, auf einem Durchmesser größer der Servoeinrichtung 310 der Bremse C und kleiner der Servoeinrichtung 410 der Bremse D. Selbstverständlich kann der Außenlamellenträger der Bremse C auch als separates, getriebegehäusefestes Bauelement ausgebildet sein.

Das Lamellenpaket 400 der Bremse D ist nunmehr in axialler Richtung gesehen zumindest weitgehend oberhalb des Lamellenpaket 300 der Bremse C angeordnet, axial unmittelbar angrenzend an die in der Gehäusewand GW integrierte Servoeinrichtung 410. Das Getriebegehäuse GG übernimmt im dargestellten Beispiel die Funktion eines Außenlamellenträgers für die Bremse D. Selbstverständlich kann der Außenlamellenträger der Bremse D auch als separates, getriebegehäusefestes Bauelement ausgebildet sein. Das Eingangselement 420 der Bremse D ist als Innenlamellenträger ausgebildet, der entsprechend der kinematischen Anbindung mit den Steg ST1 des ersten Planetenradsatzes RS1 verbunden ist. Dabei übergreift dieser Innenlamellenträger die Kupplung B in axialer Richtung radial vollständig. Räumlich gesehen ist die Kupplung B also nicht nur näher am ersten Planetenradsatz RS1 angeordnet als die Bremse C, sondern auch näher am ersten Planetenradsatz RS1 als die Bremse D.

Als dünnwandiges Stahlblech-Bauteil ausgeführt, beeinträchtigt der Innenlamellenträger (420) der Bremse D den radialen Bauraum der Kupplung B nicht nennenswert. Sofern dies der verfügbare radiale Einbauraum für das Getriebegehäuse GG zuläßt, kann der Durchmesser der Lamellen 400 der konzeptbedingt statisch höchstbelasteten Bremse D in einfacher Weise gegenüber Fig. 3 vergrößert sein, zugunsten einer Baulängenreduzierung.

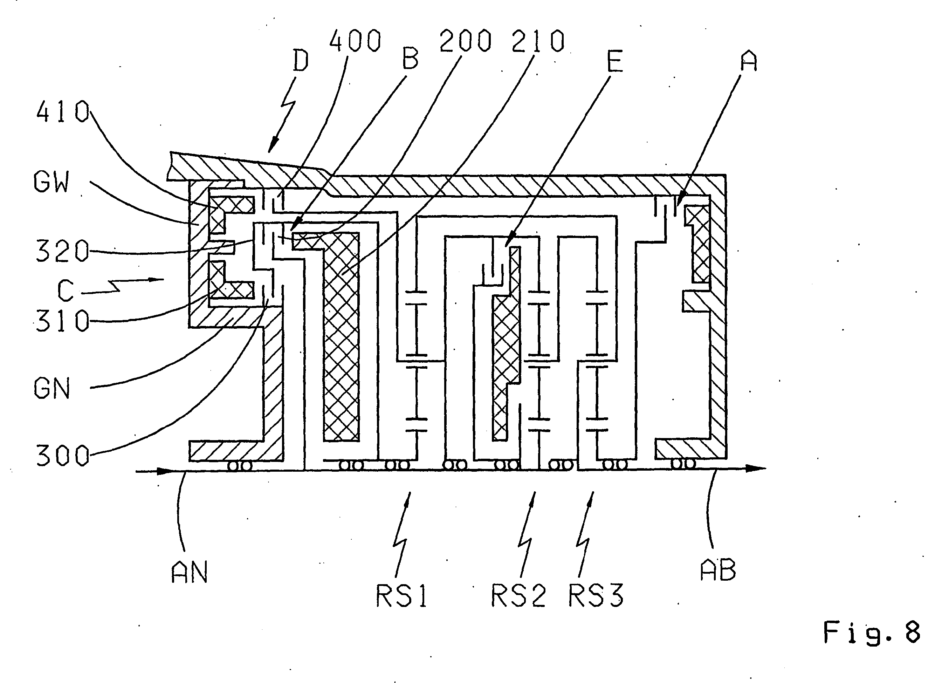

Anhand Fig. 8 wird im folgenden nun eine dritte schematische Bauteilanordnung im Detail erläutert, beispielhaft für die erfindungsgemäße Lösung der Aufgabe. Dabei geht diese dritte erfindungsgemäße Bauteilanordnung von den zuvor anhand Fig. 3 und Fig. 7 beschriebenen erfindungsgemäßen Bauteilanordnungen aus. Die kinematische Koppelung der drei Einzel-Planetenradsätze RS1, RS2, RS2 miteinander, mit den fünf Schaltelementen A bis E sowie mit Antriebs- und Abtriebswelle AN, AB wurde unverändert von Fig. 3 übernommen. Die Anordnung von Antriebswelle AN, Abtriebswelle AB, den drei Planetenradsätzen RS1, RS2, RS3, der Kupplung E als fünftes Schaltelement sowie der Bremse A als erstes Schaltelement entspricht im wesentlichen deren in Fig. 3 dargestellten Anordnung, wobei als Detailunterschied hierzu die Lagerung der Antriebswelle AN an der Abtriebswelle AB im Bereich des dritten Planetenradsatzes RS3 von Fig. 7 übernommen wurde.

Wie in Fig. 8 ersichtlich, grenzen im Unterschied zu Fig. 3 nunmehr alle drei Lamellenpakete 200, 300, 400 des zweiten, dritten und vierten Schaltelementes B, C, D axial an die mit den Servoeinrichtungen 310, 410 des dritten und vierten Schaltelementes C, D komplettierte getriebegehäusefeste Gehäusewand GW an. Gegenüber Fig. 3 unverändert sind dabei die Anordnung der Lamellen 300 und der Servoeinrichtung 310 der Bremse C in axialer Richtung gesehen radial oberhalb der Nabe GN der Gehäusewand GW, die Anordnung der Lamellen 200 der Kupplung B in axialer Richtung gesehen radial oberhalb der Lamellen 300 der Bremse C, die Ausbildung des Eingangselementes 320 der Bremse C als Belaglamellenträger, die Anordnung der Servoeinrichtung 410 der Bremse D radial oberhalb der Servoeinrichtung 310 der Bremse C, sowie die Betätigungsrichtungen aller drei Servoeinrichtungen 210, 310, 410 der drei Schaltelemente B, C, D. Die Lamellen 400 der Bremse D sind nunmehr in axialer Richtung gesehen oberhalb der Lamellen 200 der Kupplung B.

Bei hinsichtlich Lamellendurchmesser gegenüber Fig. 3 unveränderter Dimensionierung der Lamellen 300 und 200 von Bremse C und Kupplung B ermöglicht die in Fig. 8 vorgeschlagene Anordnung des Lamellenpaketes 400 der Bremse D über dem Lamellenpaket 200 der Kupplung B eine verkürzte Getriebebaulänge, insbesondere unter Berücksichtigung, daß die Bremse D konzeptbedingt das statisch höchstbeanspruchte Schaltelement dieses Automatgetriebes ist. Günstig für die antriebsmotornahe Anordnung der drei Schaltelemente C, B, D räumlich gesehen übereinander ist die übliche Einbausituation für das Automatgetriebe in einem Kraftfahrzeug mit Standardantrieb, da speziell der antriebsmotornahe Bereich des Getriebe-Einbauraums ("Getriebetunnel") bekanntlich relativ groß ist und sich im weiteren Verlauf in Richtung Abtrieb (mitunter sogar deutlich) verjüngt.

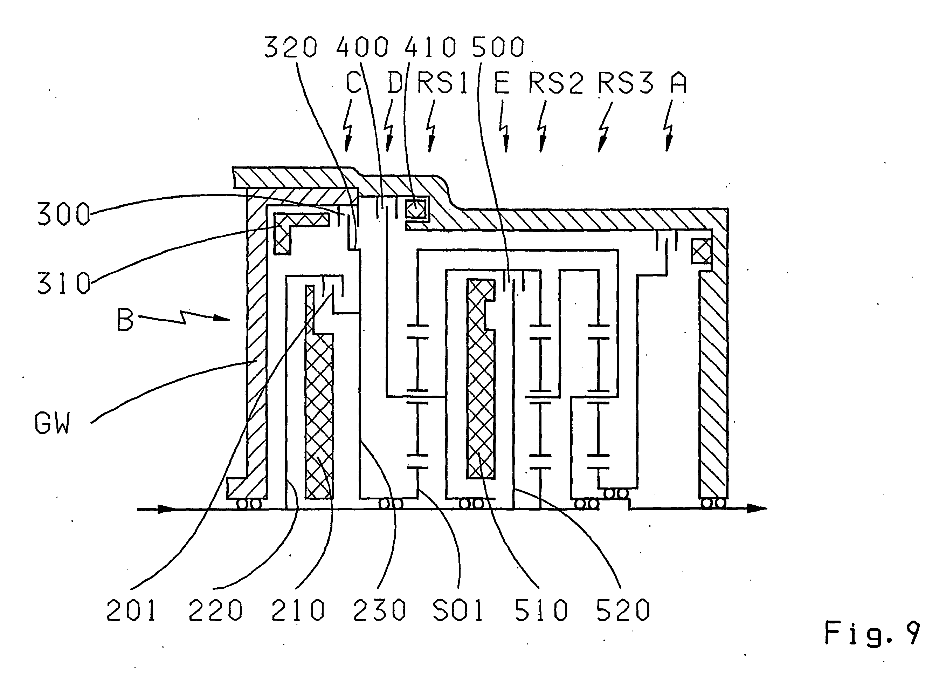

Anhand Fig. 9 wird im folgenden nun eine erfindungsgemäße vierte schematische Bauteilanordnung im Detail erläutert. Dabei geht diese vierte erfindungsgemäße Bauteilanordnung wieder aus von der zuvor anhand Fig. 3 beschriebenen ersten erfindungsgemäßen Bauteilanordnung, mit unveränderter kinematischen Koppelung der drei Einzel-Planetenradsätze RS1, RS2, RS3 miteinander, mit den fünf Schaltelementen A bis E sowie mit Antriebs- und Abtriebswelle AN, AB. Die Anordnung von Antriebswelle AN, Abtriebswelle AB, den drei Planetenradsätzen RS1, RS2, RS3, der Kupplung E als fünftes Schaltelement sowie der Bremse A als erstes Schaltelement entspricht im wesentlichen deren in Fig. 3 dargestellten Anordnung, wobei als Detailunterschied hierzu die Servoeinrichtung nicht mehr axial zwischen dem Eingangselement 520 der Kupplung E und dem zweiten Planetenradsatz RS2 angeordnet ist, sondern nunmehr axial zwischen dem ersten Planetenradsatz RS1 und dem Eingangselement 520 der Kupplung E. Entsprechend umgekehrt ist auch die Betätigungsrichtung der Servoeinrichtung 510, welche die Lamellen 500 der Kupplung E nunmehr axial in Richtung des zweiten Planetenradsatzes RS2 betätigt.

Wie in Fig. 3, sind die Lamellen 400 der Bremse D auf der dem zweiten Planetenradsatz RS2 abgewandten Seite des ersten Planetenradsatzes RS1 angeordnet, axial angrenzend an und radial oberhalb des ersten Planetenradsatzes RS1. Die Servoeinrichtung 410 der Bremse D ist nunmehr über dem ersten Planetenradsatz RS1 angeordnet, in das Getriebegehäuse GG integriert und betätigt die Lamellen 400 der Bremse D axial in Richtung der Gehäusewand GW.

Die Bremse C grenzt an die Gehäusewand GW in Richtung Getriebegehäuse-Innenraum an, wobei sowohl die Servoeinrichtung 310 der Bremse C als auch ein Außenlamellenträger zur Aufnahme von Außenlamellen des Lamellenpaketes 300 der Bremse C in die Gehäusewand GW integriert sind, auf einem großen Durchmesser nahe einem Innendurchmesser des Getriebegehäuses GG. Die Gehäusewand GW bildet also einen Kupplungsraum der Bremse C. Die Kupplung B ist zumindest teilweise innerhalb dieses Kupplungsraums der Bremse C angeordnet. Das Eingangselement 220 der Kupplung B ist als Außenlamellenträger ausgebildet, geometrisch als ein in Richtung des ersten Planetenradsatzes RS1 hin offener Topf, dessen scheibenförmiger Boden unmittelbar an die Gehäusewand GW angrenzt und mit der Antriebswelle AN verbunden ist, und innerhalb dessen zylindrischen Abschnitts das Lamellenpaket 200 und die Servoeinrichtung 210 der Kupplung B angeordnet sind. Die stets mit Drehzahl der Antriebswelle AN rotierende Servoeinrichtung 210 ist auf der Antriebswelle AN gelagert und betätigt die Lamellen 200 axial in Richtung des ersten Planetenradsatzes RS1. In dem in Fig. 9 dargestellten Beispiel sind die Lamellen 200 der Kupplung B zumindest überwiegend räumlich gesehen unterhalb der Lamellen 300 der Bremse C angeordnet. Entsprechend der thermisch unterschiedlichen Belastung von Kupplung B und Bremse C kann sich das Lamellenpaket 200 der Kupplung B aber auch weiter axial in Richtung des ersten Planetenradsatzes RS1 erstrecken als das Lamellenpaket 300 der Bremse C.

In dem in Fig. 9 dargestellten Beispiel sind Ausgangselement 230 der Kupplung B und Eingangselement 320 der Bremse C beide als Innenlamellenträger ausgebildet. Dabei ist der Innenlamellenträger (320) der Bremse C über den Innenlamellenträger (230) der Kupplung B mit dem Sonnenrad SO1 des ersten Planetenradsatzes RS1 verbunden. In dem in Fig. 9 dargestellten Beispiel ist der Innenlamellenträger (230) der Kupplung B derart ausgebildet, daß er die Belaglamellen des Lamellenpaketes 200 an derem Innendurchmesser aufnimmt. Ist beispielsweise eine einteilige Ausführung der Innenlamellenträger (230, 320) von Kupplung B und Bremse C vorgesehen, so kann es zweckmäßig sein, daß der Innenlamellenträger der Kupplung B - abweichend von der Darstellung in Fig. 9 - derart ausgebildet ist, daß er die Belaglamellen der Kupplung B von derem Außendurchmesser aus aufnimmt. In diesem Fall ist die Servoeinrichtung der Kupplung B zweckmäßigerweise dann auf der dem ersten Planeten radsatz zugewandten Seite der Lamellen der Kupplung B angeordnet und betätigt diese Lamellen in Richtung der Gehäusewand, also in zum ersten Planetenradsatz RS1 entgegengesetzter Richtung.

Wie bereits erwähnt, ist das in Fig. 3 beschriebene Getriebeschema hinsichtlich der Anordnung von Antriebs- und Abtriebswelle des Automatgetriebes relativ zueinander als beispielhaft anzusehen. Fig. 10 zeigt nun eine beispielhafte Variation der schematische Bauteilanordnung gemäß Fig. 3, nunmehr mit nicht koaxialer Anordnung von An- und Abtriebswelle. Ausgehend von der in Fig. 3 vorgeschlagenen Bauteilanordnung sind Antriebswelle AN und Abtriebswelle AB nunmehr achsparallel zueinander angeordnet. Zur kinematischen Anbindung der Abtriebswelle AB an das hier ständig mit dem Steg ST3 des dritten Planetenradsatzes RS3 verbundene Hohlrad HO1 des ersten Planetenradsatzes RS1 ist eine Stirnradstufe STST vorgesehen, die räumlich gesehen auf der dem zweiten Planetenradsatz RS2 gegenüberliegenden Seite des dritten Planetenradsatzes RS3 angeordnet ist, axial zwischen dem dritten Planetenradsatz RS3 und der Kupplung A. Dabei ist ein erstes Stirnrad STR1 dieser Stirnradstufe STST fest mit dem Steg ST3 des dritten Planetenradsatzes RS3 verbunden und beispielhaft an dem Sonnenrad SO3 des dritten Planetenradsatzes RS3 gelagert. Ein zweites Stirnrad STR2 dieser Stirnradstufe STST kämmt mit dem ersten Stirnrad STR1 und ist fest mit der Abtriebswelle verbunden. Selbstverständlich kann anstelle der hier beschriebenen zweirädrigen Stirnradstufe auch eine mehrrädrige Stirnradstufe vorgesehen sein, beispielsweise mit drei Stirnrädern und dann wieder gleicher Drehrichtung von Antriebs- und Abtriebswelle.

Wie ebenfalls aus Fig. 10 ersichtlich, durchdringt die Antriebswelle AN die Gehäusewand GW und alle drei Planetenradsätze RS1, RS2, RS3 zentrisch und ist an der der Gehäusewand GW gegenüberliegenden, deckelförmigen Außenwand des Getriebegehäuses GG gelagert. Der zur Vereinfachung nicht dargestellte Antriebsmotor des Automatgetriebes ist also auf der den Planetenradsätzen abgewandten Seite der Gehäusewand GW angeordnet. Für den Fachmann ist leicht ersichtlich, daß die Antriebswelle auch die der Gehäusewand GW gegenüberliegende, deckelförmige Außenwand des Getriebegehäuses GG durchdringen und der Antriebsmotor entsprechend auf dieser Seite des Getriebes nahe der Kupplung A angeordnet sein könnte.

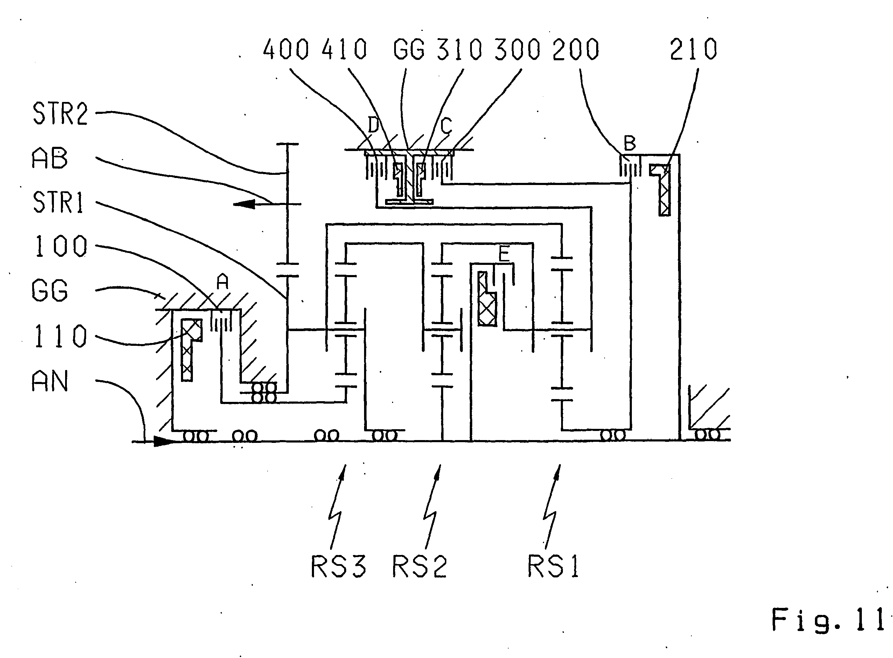

Fig. 11 zeigt eine beispielhafte zweite Bauteilanordnung mit achsparallel zueinander angeordneter Antriebs- und Abtriebswelle AN, AB. Im Unterschied zu den zuvor beschriebenen Bauteilanordnungen sind die beiden Bremsen C, D nicht mehr räumlich gesehen neben dem ersten Planetenradsatz RS1 angeordnet, sondern nunmehr nebeneinander in einem Bereich über den Planetenradsätzen, hier im Bereich über den beiden Planetenradsätzen RS2 und RS3, auf einem großen Durchmesser nahe dem Innendurchmesser des Getriebegehäuses GG. Die Servoeinrichtung 210 der unverändert auf der dem zweiten Planetenradsatze RS2 abgewandten Seite des ersten Planetenradsatzes RS1 angeordneten Kupplung B betätigt die Lamellen 200 der Kupplung B nunmehr axial in Richtung des ersten Planetenradsatzes RS1. Die Bremse C ist näher an der Kupplung B angeordnet als die Bremse D, sowohl bezogen auf das jeweilige Lamellenpaket als auch auf die jeweilige Servoeinrichtung. Im dargestellten Beispiel ist das Lamellenpaket 300 der Bremse C in axialer Richtung gesehen überwiegend radial über dem zweiten Planetenradsatz RS2 angeordnet. Die Servoeinrichtung 310 der Bremse C betätigt die Lamellen 300 der Bremse C axial in Richtung der Kupplung B. Axial in Richtung Stirntrieb schließt sich die Bremse D an die Bremse C an. Die Lamellen 400 der Bremse D sind im dargestellten Beispiel in einem Bereich über dem zweiten und dritten Planetenradsatz RS2, RS3. angeordnet. Die Servoeinrichtung 410 betätigt die Lamellen 400 in zur Bremse C (bzw. zur Kupplung B) entgegengesetzter Richtung. Dabei sind die Servoeinrichtungen 310 und 410 der beiden Bremsen C, D unmittelbar benachbart, sodaß sie fertigungs-und montagetechnisch günstig hier in einen gemeinsamen, getriebegehäusefesten Außenlamellenträger, der die Außenlamellen beider Lamellenpakete 300, 400 aufnimmt, integriert sind. Vorzugsweise weisen die Lamellen 300 und 400 dabei den gleichen Durchmesser auf (Gleichteil-Konzept).

In einer anderen Ausgestaltung kann selbstverständlich auch vorgesehen sein, daß das Getriebegehäuse GG in diesem Abschnitt ein geeignetes Mitnahmeprofil aufweist zur Aufnahme der Außenlamellen des Lamellenpaketes 300 der Bremse C und/oder der Außenlamellen des Lamellenpaketes 400 der Bremse D.

Selbstverständlich kann die Anordnung der beiden nebeneinander angeordneten Bremsen C, D in axialer Richtung von der Darstellung in Fig. 11 in den Grenzen zwischen dem zweiten Stirnrad STR2 des Stirntriebs und dem Lamellenpaket 200 der Kupplung B abweichen.

Da die Antriebswelle AN das Automatgetriebe in axialer Richtung zentrisch vollständig durchgreift, ist in Fig. 11 der mit der Antriebswelle AN wirkverbundene (nicht dargestellte) Antriebsmotor beispielhaft auf der dem zweiten Planetenradsatze RS2 abgewandten Seite des dritten Planetenradsatzes RS3 angeordnet, also auf der Getriebeseite, an der die Bremse A und die mit der Abtriebswelle AB wirkverbundene Stirnradstufe angeordnet sind, also auf der der Kupplung B gegenüberliegenden Getriebeseite. Dabei grenzt die Bremse A an die dem Antriebsmotor zugewandten Außenwand (die auch als Gehäusedeckel ausgeführt sein kann) des Getriebegehäuses GG an.

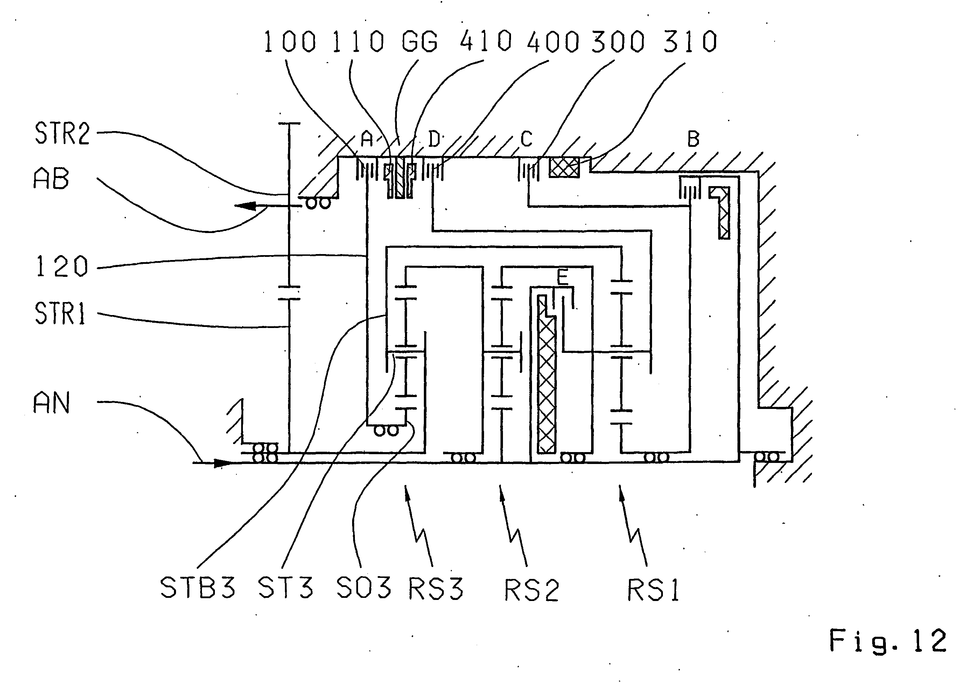

Fig. 12 zeigt nun eine beispielhafte dritte Bauteilanordnung mit achsparallel zueinander angeordneter Antriebs-und Abtriebswelle AN, AB. Im Unterschied zu Fig. 11 sind nunmehr die Bremsen A, C und D nebeneinander am Innendurchmesser des Getriebegehäuses GG angeordnet, wobei sich die Bremse A axial in Richtung Stirntrieb an die Bremse D anschließt. Vorzugsweise weisen die Lamellen 100, 300 und 400 der drei Bremsen A, C, D den gleichen Durchmesser auf (Gleichteil-Konzept). Ähnlich wie die Bremsen C und D in Fig. 11, sind nunmehr die Bremsen A und D als Baugruppe zusammengefaßt. Die Servoeinrichtung 110, 410 beider Bremsen A, D sind unmittelbar benachbart zueinander angeordnet. Die Servoeinrichtung 410 der Bremse D ist auf der der Bremse C abgewandten Seite des Lamellenpaketes 400 der Bremse D angeordnet und betätigt diese Lamellen 400 axial in Richtung der Kupplung B. Die Servoeinrichtung 110 der Bremse A ist auf der der Bremse D zugewandten Seite des Lamellenpaketes 100 der Bremse A angeordnet und betätigt diese Lamellen 100 axial in zur Bremse D (bzw. Kupplung B) entgegengesetzter Richtung.

Wie in Fig. 12 ersichtlich, ist das dem zweiten Planetenradsatze RS2 abgewandte Stegblech des Stegs ST3 des dritten Planetenradsatzes RS3 mit STB3 bezeichnet. Axial unmittelbar an dieses Stegblech STB3 angrenzend, erstreckt sich das mit dem Sonnenrad SO3 des dritten Planetenradsatzes RS3 verbundene Eingangselement 120 (Innenlamellenträger) der Bremse A radial nach außen. Auf der dem Stegblech STB3 gegenüberliegenden Seite des Eingangselementes 120 (Innenlamellenträgers) der Bremse A wiederum grenzt die mit der Abtriebswelle wirkverbundene Stirnradstufe mit den beiden Stirnrädern STR1 und STR2 an. Eine Nabe des ersten Stirnrades STR1 ist auf der Antriebswelle AN gelagert und durchgreift das Eingangselement 120 der Bremse A und das Sonnenrad SO3 des dritten Planetenradsatzes RS3 zentrisch und ist auf der dem zweiten Planetenradsatze RS2 zugewandten Seite des Stegs ST3 mit diesem Steg ST3 verbunden. Die Stirnradstufe ist somit unmittelbar an einer Außenwand des Getriebegehäuses GG angeordnet. Entsprechend steif kann die Lagerung des ersten Stirnrades STR1 an dieser Außenwand ausgeführt sein, im dargestellten Beispiel an einem entsprechenden zylindrischen Vorsprung der Außenwand. Selbstverständlich kann diese Außenwand auch als Gehäusedeckel ausgeführt sein. In dem in Fig. 12 dargestellten Beispiel ist die Stirnradstufe an der dem Antriebsmotor zugewandten Seite des Automatgetriebes angeordnet, sodaß die Antriebswelle AN die Nabe des ersten Stirnrades STR1 zentrisch durchdringt und die Naben des ersten Stirnrades STR1 zusätzlich auf der Antriebswelle AN gelagert ist.

Um das erfindungsgemäße Mehrstufengetriebe auch für andere Konfigurationen eines Kraftfahrzeug-Antriebsstrangs einsetzen zu können, wird der Fachmann durch ähnliche Modifikationen auch eine zueinander winklige Lage von Antriebs- und Abtriebswelle des Automatgetriebes darstellen, beispielsweise durch Hinzufügen eines Kegeltriebs anstelle der zuvor beschriebenen Stirnradstufe für einen Frontantrieb mit längs zur Fahrtrichtung eingebautem Antriebsmotor.

Wie bereits erwähnt, ist das in den Fig. 3 und Fig. 7 bis Fig. 12 beschriebene Getriebeschema auch für die erfindungsgemäße Koppelung der Radsatzelemente untereinander und zu den Schaltelementen sowie zu An- und Abtriebswelle des Automatgetriebes als beispielhaft anzusehen. Fig. 13 zeigt nun eine beispielhafte Variation der schematischen Bauteilanordnung gemäß Fig. 3, mit einer modifizierten Koppelung einzelner Radsatzelemente, wobei diese kinematische Koppelung der Radsatzelemente schon aus dem Stand der Technik der DE 199 12 480 A1 bekannt ist. Im Unterschied zu Fig. 3 sind nunmehr das Hohlrad HO1 des ersten Planetenradsatzes RS1 und der Steg ST2 des zweiten Planetenradsatzes RS2 und die Abtriebswelle AB ständig miteinander verbunden, sowie der Steg ST3 des dritten Planetenradsatzes RS3 ständig mit dem Hohlrad HO2 des zweiten Planetenradsatzes RS2 und der Steg ST1 des ersten Planetenradsatzes RS1 ständig mit dem Hohlrad HO3 des dritten Planetenradsatzes RS3. Ansonsten ist die kinematische Koppelung der drei Einzel-Planetenradsätze RS1, RS2, RS3 an die fünf Schaltelemente A bis E und an die Antriebswelle gegenüber Fig. 3 unverändert. Auch die räumliche Anordnung der fünf Schaltelemente A bis E relativ zueinander und zu den drei Planetenradsätzen RS1, RS2, RS3 ist gegenüber Fig. 3 unverändert.

Der Fachmann wird diese in Fig. 13 beschriebene Modifikation des Getriebeschemas von Fig. 3 sinngemäß auch auf die in Fig. 7 bis Fig. 12 dargestellten Getriebeschemata übertragen.

Die in Fig. 3 und Fig. 7 bis Fig. 13 dargestellten schematische Bauteilanordnungen und auch die in Fig. 4a/4b dargestellte praktisch ausgeführte Getriebekonstruktion gehen generell von Lamellenbremsen als konstruktive Lösung für die als Bremse auszuführenden Schaltelemente aus. Prinzipiell sind einzelne oder auch alle Lamellenbremsen konstruktiv durch Bandbremsen ersetzbar. Im nicht geschalteten Zustand sind Bandbremsen hinsichtlich Schleppmomentverlust bekanntlich günstiger als Lamellenbremsen. Für alle gezeigten Bauteilanordnungen bietet es sich an, die im zweiten bis sechsten Vorwärtsgang nicht geschaltete Bremse D und/oder die im fünften und sechsten Vorwärtsgang sowie im Rückwärtsgang nicht geschaltete Bremse A als Bandbremse auszuführen.

### Bezugszeichen

- A: erstes Schaltelement, Bremse
- B: zweites Schaltelement, Kupplung
- C: drittes Schaltelement, Bremse
- D: viertes Schaltelement, Bremse
- E: fünftes Schaltelement, Kupplung

- AN: Antriebswelle
- AB: Abtriebswelle
- GG: Getriebegehäuse
- GW: Gehäusewand
- GN: Nabe der Gehäusewand
- GZ: Gehäusezwischenwand
- ABF: Abtriebsflansch
- NAN: Antriebsdrehzahlsensor
- NAB: Abtriebsdrehzahlsensor
- PSK: Parksperrenklinke
- PSR: Parksperrenrad
- ROH: Rohr der Antriebswelle
- ZYL: Zylinder
- AX1 - AX8: Axiallager
- RR1 - RR4: rotierender Dichtring
- STST: Stirnradstufe
- STR1: erstes Stirnrad der Stirnradstufe
- STR2: zweites Stirnrad der Stirnradstufe

- RS1: erster Planetenradsatz
- HO1: Hohlrad des ersten Planetenradsatzes
- SO1: Sonnenrad des ersten Planetenradsatzes
- ST1: Steg des ersten Planetenradsatzes
- PL1: Planetenrad des ersten Planetenradsatzes
- STB11: erstes Stegblech des ersten Planetenradsatzes
- STB12: zweites Stegblech des ersten Planetenradsatzes
- RS2: zweiter Planetenradsatz
- HO2: Hohlrad des zweiten Planetenradsatzes
- SO2: Sonnenrad des zweiten Planetenradsatzes
- ST2: Steg des zweiten Planetenradsatzes
- PL2: Planetenrad des zweiten Planetenradsatzes
- STB2: Stegblech des zweiten Planetenradsatzes

- RS3: dritter Planetenradsatz
- HO3: Hohlrad des dritten Planetenradsatzes
- SO3: Sonnenrad des dritten Planetenradsatzes
- ST3: Steg des dritten Planetenradsatzes
- PL3: Planetenrad des dritten Planetenradsatzes
- STB3: Stegblech des dritten Planetenradsatzes

- 100: Lamellen des ersten Schaltelementes
- 110: Servoeinrichtung des ersten Schaltelementes
- 111: Druckraum des ersten Schaltelementes
- 113: Rückstellelement der Servoeinrichtung des ersten Schaltelementes
- 114: Kolben der Servoeinrichtung des ersten Schaltelementes
- 118: Druckmittelzuführung zum Druckraum des ersten Schaltelementes
- 120: Eingangselement des ersten Schaltelementes, Innenlamellenträger
- 121: zylindrischer Abschnitt des Eingangselementes des ersten Schaltelementes
- 200: Lamellen des zweiten Schaltelementes
- 210: Servoeinrichtung des zweiten Schaltelementes
- 211: Druckraum des zweiten Schaltelementes
- 212: Druckausgleichsraum des zweiten Schaltelementes
- 213: Rückstellelement der Servoeinrichtung des zweiten Schaltelementes
- 214: Kolben der Servoeinrichtung des zweiten Schaltelementes
- 215: Stauscheibe der Servoeinrichtung des zweiten Schaltelementes
- 218: Druckmittelzuführung zum Druckraum des zweiten Schaltelementes
- 219: Schmiermittelzuführung zum Druckausgleichsraum des zweiten Schaltelementes
- 220: Eingangselement des zweiten Schaltelementes
- 221: zylindrischer Abschnitt des Eingangselementes des zweiten Schaltelementes
- 222: scheibenförmiger Abschnitt des Eingangselementes des zweiten Schaltelementes
- 223: Nabe des Eingangselementes des zweiten Schaltelementes
- 230: Ausgangselement des zweiten Schaltelementes
- 231: erster zylindrischer Abschnitt des Ausgangselementes des zweiten Schaltelementes
- 232: erster scheibenförmiger Abschnitt des Ausgangselementes des zweiten Schaltelementes
- 233: Nabe des Ausgangselementes des zweiten Schaltelementes
- 234: zweiter zylindrischer Abschnitt des Ausgangselementes des zweiten Schaltelementes
- 235: zweiter scheibenförmiger Abschnitt des Ausgangselementes des zweiten Schaltelementes
- 300: Lamellen des dritten Schaltelementes
- 310: Servoeinrichtung des dritten Schaltelementes
- 311: Druckraum des dritten Schaltelementes
- 313: Rückstellelement der Servoeinrichtung des dritten Schaltelementes
- 314: Kolben der Servoeinrichtung des dritten Schaltelementes
- 318: Druckmittelzuführung zum Druckraum des dritten Schaltelementes
- 320: Eingangselement des dritten Schaltelementes
- 321: zylindrischer Abschnitt des Eingangselementes des dritten Schaltelementes
- 322: scheibenförmiger Abschnitt des Eingangselementes des dritten Schaltelementes
- 400: Lamellen des vierten Schaltelementes
- 410: Servoeinrichtung des vierten Schaltelementes
- 411: (einziger) Druckraum des vierten Schaltelementes
- 411a: erster Druckraum des vierten Schaltelementes
- 411b: zweiter Druckraum des vierten Schaltelementes
- 413: Rückstellelement der Servoeinrichtung des vierten Schaltelementes
- 414: Kolben der Servoeinrichtung des vierten Schaltelementes
- 416: Betätigungs-Stempel des vierten Schaltelementes
- 418: Druckmittelzuführung zum Druckraum der vierten Schaltelementes
- 420: Eingangselement des vierten Schaltelementes, Innenlamellenträger
- 421: zylindrischer Abschnitt des Eingangselementes des vierten Schaltelementes
- 500: Lamellen des fünften Schaltelementes
- 510: Servoeinrichtung des fünften Schaltelementes
- 511: Druckraum des fünften Schaltelementes
- 512: Druckausgleichsraum des fünften Schaltelementes
- 513: Rückstellelement der Servoeinrichtung des fünften Schaltelementes
- 514: Kolben der Servoeinrichtung des fünften Schalt-elementes
- 515: Stauscheibe der Servoeinrichtung des fünften Schaltelementes
- 517: Stützscheibe
- 518: Druckmittelzuführung zum Druckraum des fünften Schaltelementes
- 519: Schmiermittelzuführung zum Druckausgleichsraum des fünften Schaltelementes
- 520: Eingangselement des fünften Schaltelementes
- 521: zylindrischer Abschnitt des Eingangselementes des fünften Schaltelementes
- 522: scheibenförmiger Abschnitt des Eingangselementes des fünften Schaltelementes
- 523: Nabe des des Eingangselementes des fünften Schalt-elementes
- 530: Ausgangselement des fünften Schaltelementes

## Patentansprüche

1. Mehrstufen-Automatgetriebe, mit einer Antriebswelle (AN), einer Abtriebswelle (AB), mindestens drei Einzel-Planetenradsätzen (RS1, RS2, RS3), sowie mindestens fünf Schaltelementen (A bis E), wobei
- die drei Planetenradsätze (RS1, RS2, RS3) koaxial zueinander angeordnet sind,
- der zweite Planetenradsatz (RS2) räumlich gesehen zwischen dem ersten und zweiten Planetenradsatz (RS1, RS3) angeordnet ist,
- ein Sonnenrad (SO3) des dritten Planetenradsatzes (RS3) über das erste Schaltelement (A) an einem Getriebegehäuse (GG) des Mehrstufen-Automatgetriebes festsetzbar ist,
- die Antriebswelle (AN) mit einem Sonnenrad (SO2) des zweiten Planetenradsatzes (RS2) verbunden ist,
- die Antriebswelle (AN) über das zweite Schaltelement (B) mit einem Sonnenrad (SO1) des ersten Planetenradsatzes (RS1) und/oder über das fünfte Schaltelement (E) mit einem Steg (ST1) des ersten Planetenradsatzes (RS1) verbindbar ist,
- alternativ das Sonnenrad (SO1) des ersten Planetenradsatzes (RS1) über das dritte Schaltelement (C) und/oder der Steg (ST1) des ersten Planetenradsatzes (RS1) über das vierte Schaltelement (D) an dem Getriebegehäuse (GG) festsetzbar ist und
- die Abtriebswelle (AB) mit einem Hohlrad (HO1) des ersten Planetenradsatzes (RS1) und einem der Stege (ST2, ST3) des zweiten oder dritten Planetenradsatzes (RS3) verbunden ist,
**dadurch gekennzeichnet, dass** der erste Planetenradsatz (RS1) und der zweite Planetenradsatz (RS2) in axialer Richtung nur von einer Welle zentrisch vollständig durchgriffen wird.

2. Mehrstufen-Automatgetriebe nach Anspruch 1, **dadurch gekennzeichnet, dass** die den ersten und/oder zweiten Planetenradsatz (RS1, RS2) in axialer Richtung durchgreifende Welle die Antriebswelle (AN) ist.

3. Mehrstufen-Automatgetriebe nach Anspruch 1 oder 2, **dadurch gekennzeichnet, dass** das fünfte Schaltelement (E) räumlich gesehen zwischen dem ersten und zweiten Planetenradsatz (RS1, RS2) angeordnet ist.

4. Mehrstufen-Automatgetriebe nach Anspruch 1, 2 oder 3, **dadurch gekennzeichnet, dass** das Verbindungselement zwischen dem Steg (ST1) des ersten Planetenradsatzes (RS1) und dem Hohlrad (HO2) des zweiten Planetenradsatzes (RS2) zugleich einen Lamellenträger des fünften Schaltelementes (E) bildet.

5. Mehrstufen-Automatgetriebe nach einem der Ansprüche 1 bis 4, **dadurch gekennzeichnet, dass** das zweite Schaltelement (B) auf der dem fünften Schaltelement (E) gegenüberliegenden Seite des ersten Planetenradsatzes (RS1) angeordnet sind.

6. Mehrstufen-Automatgetriebe nach einem der Ansprüche 1 bis 5, **dadurch gekennzeichnet, dass** das dritte und vierte Schaltelement (C, D) räumlich gesehen auf der dem fünften Schaltelement (E) gegenüberliegenden Seite des ersten Planetenradsatzes (RS1) angeordnet sind.

7. Mehrstufen-Automatgetriebe nach einem der Ansprüche 1 bis 5, **dadurch gekennzeichnet, dass** das dritte und vierte Schaltelement (C, D) nebeneinander angeordnet sind, in axialer Richtung gesehen in einem Bereich radial über den Planetenradsätzen (RS1, RS2, RS3).

8. Mehrstufen-Automatgetriebe nach einem der Ansprüche 1 bis 7, **dadurch gekennzeichnet, dass** eine Servoeinrichtung (510) des fünften Schaltelementes (E) an der Welle, die den ersten Planetenradsatz (RS1) zentrisch durchgreift, insbesondere der Antriebswelle (AN), gelagert ist.

9. Mehrstufen-Automatgetriebe nach einem der Ansprüche 1 bis 8, **dadurch gekennzeichnet, dass** die Servoeinrichtung (210) des zweiten Schaltelementes (B) näher am ersten Planetenradsatz (RS1) angeordnet ist als eine Servoeinrichtung (310) des dritten Schaltelementes (C).

10. Mehrstufen-Automatgetriebe nach einem der Ansprüche 1 bis 9, **dadurch gekennzeichnet, dass** eine Servoeinrichtung (210) des zweiten Schaltelementes (B) benachbart zum ersten Planetenradsatz (RS1) angeordnet ist.

11. Mehrstufen-Automatgetriebe nach einem der Ansprüche 1 bis 9, **dadurch gekennzeichnet, dass** eine Servoeinrichtung (210) des zweiten Schaltelementes (B) benachbart zu einer getriebegehäusefesten Gehäusewand (GW), die eine Außenwand des Getriebegehäuses (GG) bildet, angeordnet ist.

12. Mehrstufen-Automatgetriebe nach einem der Ansprüche 1 bis 11, **dadurch gekennzeichnet, dass** die Servoeinrichtung (210) des zweiten Schaltelementes (B) an dem Sonnenrad (SO1) des ersten Planetenradsatzes (RS1) gelagert ist.

13. Mehrstufen-Automatgetriebe nach einem der Ansprüche 1 bis 11, **dadurch gekennzeichnet, dass** die Servoeinrichtung (210) des zweiten Schaltelementes (B) auf der Welle, die den ersten Planetenradsatz (RS1) zentrisch durchgreift, insbesondere der Antriebswelle (AN), gelagert ist.

14. Mehrstufen-Automatgetriebe nach einem der Ansprüche 1 bis 13, **dadurch gekennzeichnet, dass** Lamellen (300, 400) des dritten und vierten Schaltelementes (C, D) axial an die Gehäusewand (GW) angrenzen.

15. Mehrstufen-Automatgetriebe nach einem der Ansprüche 1 bis 14, **dadurch gekennzeichnet, dass** Lamellen (200) des zweiten Schaltelementes (B) näher am ersten Planetenradsatz (RS1) angeordnet sind als die Lamellen des vierten Schaltelementes (400).

16. Mehrstufen-Automatgetriebe nach einem der Ansprüche 1 bis 15, **dadurch gekennzeichnet, dass** die Lamellen (300) des dritten Schaltelementes (C) radial unterhalb der Lamellen (400) des vierten Schaltelementes (D) angeordnet sind.

17. Mehrstufen-Automatgetriebe nach einem der Ansprüche 1 bis 13, **dadurch gekennzeichnet, dass** die Lamellen (200, 300) des zweiten und dritten Schaltelementes (B, C) axial an die Gehäusewand (GW) angrenzen.

18. Mehrstufen-Automatgetriebe nach einem der Ansprüche 1 bis 13 oder 17, **dadurch gekennzeichnet, dass** Lamellen (400) des vierten Schaltelementes (D) näher am ersten Planetenradsatz (RS1) angeordnet sind als die Lamellen (200) des zweiten Schaltelementes (B).

19. Mehrstufen-Automatgetriebe nach einem der Ansprüche 1 bis 13, 17 oder 18, **dadurch gekennzeichnet, dass** die Lamellen (300) des dritten Schaltelementes (C) radial unterhalb der Lamellen (200) des zweiten Schaltelementes (B) angeordnet sind.

20. Mehrstufen-Automatgetriebe nach einem der Ansprüche 1 bis 13, **dadurch gekennzeichnet, dass** die Lamellen (200, 300, 400) des zweiten, dritten und vierten Schaltelementes (B, C, D) axial an die Gehäusewand (GW) angrenzen.

21. Mehrstufen-Automatgetriebe nach einem der Ansprüche 1 bis 13, **dadurch gekennzeichnet, dass** die Lamellen (300) des dritten Schaltelementes (C) radial unterhalb der Lamellen (200) des zweiten Schaltelementes (B) und die Lamellen (200) des zweiten Schaltelementes (B) radial unterhalb der Lamellen (400) des vierten Schaltelementes (D) angeordnet sind.

22. Mehrstufen-Automatgetriebe nach einem der Ansprüche 1 bis 5 oder 7 bis 13, **dadurch gekennzeichnet, dass** Lamellen (300) des dritten Schaltelementes (C) näher an dem zweiten Schaltelement (B) angeordnet sind als Lamellen (400) des vierten Schaltelementes (D).

23. Mehrstufen-Automatgetriebe nach einem der Ansprüche 1 bis 22, **dadurch gekennzeichnet, dass** das erste Schaltelement (A) räumlich gesehen auf der dem zweiten Planetenradsatz (RS2) abgewandten Seite des dritten Planetenradsatzes (RS3) angeordnet ist.

24. Mehrstufen-Automatgetriebe nach Anspruch 23, **dadurch gekennzeichnet, dass** das erste Schaltelement (A) an den dritten Planetenradsatz (RS3) angrenzt.

25. Mehrstufen-Automatgetriebe nach einem der Ansprüche 1 bis 24, **dadurch gekennzeichnet, dass** das erste Schaltelement (A) an eine Außenwand des Getriebegehäuses (GG) oder an einen Getriebegehäusedeckel, der mit dem Getriebegehäuse (GG) verdrehfest verbunden ist und eine Außenwand des Automatgetriebes bildet, angrenzt.

26. Mehrstufen-Automatgetriebe nach einem der Ansprüche 1 bis 25, **dadurch gekennzeichnet, dass** insgesamt acht Axiallager (AX1 bis AX8) vorgesehen sind zur axialen Abstützung von innerhalb des Getriebegehäuses (GG) angeordneten Bauelementen.

27. Mehrstufen-Automatgetriebe nach einem der Ansprüche 1 bis 27, **dadurch gekennzeichnet, dass** innerhalb des Getriebegehäuses (GG) insgesamt vier rotierende Dichtringe (RR1 bis RR4) vorgesehen sind zur dynamischen Abdichtung von einzelnen Druck- und Schmiermittelzuführungen gegeneinander und gegen andere Bauelemente.

28. Mehrstufen-Automatgetriebe nach einem der Ansprüche 1 bis 27, **dadurch gekennzeichnet, dass** Antriebswelle (AN) und Abtriebswelle (AB) koaxial zueinander verlaufen.

29. Mehrstufen-Automatgetriebe nach Anspruch 28, **dadurch gekennzeichnet, dass** die mit dem Hohlrad (HO1) des ersten Planetenradsatzes (RS1) wirkverbundene Abtriebswelle (AB) den dritten Planetenradsatz (RS3) in axialer Richtung zentrisch durchgreift.

30. Mehrstufen-Automatgetriebe nach Anspruch 28 oder 29, **dadurch gekennzeichnet, dass** die mit dem Hohlrad (HO1) des ersten Planetenradsatzes (RS1) wirkverbundene Abtriebswelle (AB) einen Kupplungsraum des ersten Schaltelementes (A), der insbesondere durch einen Lamellenträger und/oder die Servoeinrichtung (110) des ersten Schaltelementes (A) gebildet wird, in axialer Richtung zentrisch durchgreift.

31. Mehrstufen-Automatgetriebe nach einem der Ansprüche 1 bis 27, **dadurch gekennzeichnet, dass** Antriebswelle (AN) und Abtriebswelle (AB) nicht koaxial zueinander verlaufen, insbesondere dass Antriebswelle (AN) und Abtriebswelle. (AB) achsparallel oder winklig zueinander verlaufen.

32. Mehrstufen-Automatgetriebe nach Anspruch 31, **dadurch gekennzeichnet, daß** zur Wirkverbindung zwischen Abtriebswelle (AB) und Hohlrad (HO1) des ersten Planetenradsatzes (RS1) mindestens ein erstes Stirnrad (STR1) vorgesehen ist, das räumlich gesehen im Bereich radial oberhalb des ersten und/oder zweiten und/oder dritten Planetenradsatzes (RS1, RS2, RS3) angeordnet ist.

33. Mehrstufen-Automatgetriebe nach Anspruch 31, **dadurch gekennzeichnet, dass** zur Wirkverbindung zwischen Abtriebswelle (AB) und Hohlrad (HO1) des ersten Planetenradsatzes (RS1) mindestens ein erstes Stirnrad (STR1) vorgesehen ist, das räumlich gesehen axial zwischen dem dritten Planetenradsatz (RS3) und dem ersten Schaltelement (A) angeordnet ist.

34. Mehrstufen-Automatgetriebe nach Anspruch 31, **dadurch gekennzeichnet, dass** zur Wirkverbindung zwischen Abtriebswelle (AB) und Hohlrad (HO1) des ersten Planetenradsatzes (RS1) mindestens ein erstes Stirnrad (STR1) vorgesehen ist, das räumlich gesehen axial zwischen dem ersten Schaltelement (A) und einer Außenwand des Getriebegehäuses (GG) bzw. axial zwischen dem ersten Schaltelement (A) und einem mit dem Getriebegehäuse (GG) verdrehfest verbundenen Getriebegehäusedeckel angeordnet ist.

35. Mehrstufen-Automatgetriebe nach Anspruch 31 oder 34, **dadurch gekennzeichnet, dass** zur Wirkverbindung zwischen Abtriebswelle (AB) und Hohlrad (HO1) des ersten Planetenradsatzes (RS1) mindestens ein erstes Stirnrad (STR1) vorgesehen ist, das räumlich gesehen axial an eine Außenwand des Getriebegehäuses (GG) bzw. axial an einen mit dem Getriebegehäuses (GG) verdrehfest verbundenen Getriebegehäusedeckel angrenzt.

36. Mehrstufen-Automatgetriebe nach einem der Ansprüche 1 bis 35, **dadurch gekennzeichnet, dass** das Hohlrad (HO1) des ersten Planetenradsatzes (RS1) und der Steg (ST3) des dritten Planetenradsatzes (RS3) und die Abtriebswelle (AB) ständig miteinander verbunden sind, und daß der Steg (ST2) des zweiten Planetenradsatzes (RS2) ständig mit einem Hohlrad (HO3) des dritten Planetenradsatzes (RS3) und der Steg (ST1) des ersten Planetenradsatzes (RS1) ständig mit einem Hohlrad (HO2) des zweiten Planetenradsatzes (RS2) verbunden ist.

37. Mehrstufen-Automatgetriebe nach einem der Ansprüche 1 bis 35, **dadurch gekennzeichnet, dass** das Hohlrad (HO1) des ersten Planetenradsatzes (RS1) und der Steg (ST2) des zweiten Planetenradsatzes (RS2) und die Abtriebswelle (AB) ständig miteinander verbunden sind, und daß der Steg (ST3) des dritten Planetenradsatzes (RS3) ständig mit einem Hohlrad (HO2) des zweiten Planetenradsatzes (RS2) und der Steg (ST1) des ersten Planetenradsatzes (RS1) ständig mit einem Hohlrad (HO3) des dritten Planetenradsatzes (RS3) verbunden ist.

38. Mehrstufen-Automatgetriebe nach einem der Ansprüche 1 bis 37, **dadurch gekennzeichnet, dass** durch selektives Schließen der Schaltelemente (A bis E) mindestens sechs Vorwärtsgänge derart schaltbar sind, daß zum Umschalten von einem Gang in den nächstfolgend höheren oder nächstfolgend niedrigeren Gang von den gerade betätigten Schaltelementen jeweils nur ein Schaltelement geöffnet und ein weiteres Schaltelement geschlossen wird,
wobei in dem ersten Vorwärtsgang das erste und vierte Schaltelement (A, D), in dem zweiten Vorwärtsgang das erste und dritte Schaltelement (A, C), in dem dritten Vorwärtsgang das erste und zweite Schaltelement (A, B), in dem vierten Vorwärtsgang das erste und fünfte Schaltelement (A, E), in dem fünften Vorwärtsgang das zweite und fünfte Schaltelement (B, E), in dem sechsten Vorwärtsgang das dritte und fünfte Schaltelement (C, E), und in einem Rückwärtsgang das zweite und vierte Schaltelement (B, D) geschlossen sind.

## Claims

1. Multistep automatic transmission with a drive shaft (AN), an output shaft (AB), at least three separate planetary gearsets (RS1, RS2, RS3), and at least five shifting components (A thru E), with
- the three planetary gearsets (RS1, RS2, RS3) being arranged coaxially in relation to each other;
- the second planetary gearset (RS2) being arranged between the first and the second planetary gearset (RS1, RS2);
- a sun gear (SO3) of the third planetary gearset (RS3) being lockable to a transmission housing (GG) of the multistep automatic transmission via the first shifting component (A);
- the drive shaft (AN) being connected to a sun gear (SO2) of the second planetary gearset (RS2);
- the drive shaft (AN) being connectable via the second shifting component (B) to a sun gear (SO1) of the first planetary gearset (RS1) and/or via the fifth shifting component (E) to a spider (ST1) of the first planetary gearset (RS1);
- alternatively the sun gear (SO1) of the first planetary gearset (RS1) being lockable to the transmission housing (GG) via the third shifting component (C) and/or the spider (ST1) of the first planetary gearset (RS1) being lockable to the transmission housing (GG) via the fourth shifting component (D); and
- the output shaft (AB) being connected to a ring gear (HO1) of the first planetary gearset (RS1) and to one of the spiders (ST2, ST3) of the second or the third planetary gearset (RS3);
**characterized in that** the first planetary gearset (RS1) and the second planetary gearset (RS2) are centrally fully penetrated in axial direction by a single shaft.

2. Multistep automatic transmission according to claim 1, **characterized in that** the shaft penetrating through the first and/or the second planetary gearset (RS1, RS2) in axial direction is the drive shaft (AN).

3. Multistep automatic transmission according to claim 1 or 2, **characterized in that** the fifth shifting component (E) is arranged between the first and the second planetary gear set (RS1, RS2).

4. Multistep automatic transmission according to claim 1, 2 or 3, **characterized in that** the connecting element between the spider (ST1) of the first planetary gearset (RS1) and the ring gear (HO2) of the second planetary gearset (RS2) also constitutes a disk carrier of the fifth shifting component (E).

5. Multistep automatic transmission according to one of the claims 1 thru 4, **characterized in that** the second shifting component (B) is arranged on the side of the first planetary gearset (RS1) facing the fifth shifting component (E).

6. Multistep automatic transmission according to one of the claims 1 thru 5, **characterized in that** the third and fourth shifting components (C, D) are arranged on the side of the first planetary gearset (RS1) facing the fifth shifting component (E).

7. Multistep automatic transmission according to one of the claims 1 thru 5, **characterized in that** the third and fourth shifting components (C, D) are arranged next to one another and, viewed in axial direction, in an area radially above the planetary gearsets (RS1, RS2, RS3).

8. Multistep automatic transmission according to one of the claims 1 thru 7, **characterized in that** a servo unit (510) of the fifth shifting component (E) is supported on the shaft which centrally reaches through the first planetary gearset (RS1), in particular on the drive shaft (AN).

9. Multistep automatic transmission according to one of the claims 1 thru 8, **characterized in that** the servo unit (210) of the second shifting component (B) is arranged more closely towards the first planetary gearset (RS1) than a servo unit (310) of the third shifting component (C).

10. Multistep automatic transmission according to one of the claims 1 thru 9, **characterized in that** a servo unit (210) of the second shifting component (B) is arranged in the neighborhood of the first planetary gearset (RS1).

11. Multistep automatic transmission according to one of the claims 1 thru 9, **characterized in that** a servo unit (210) of the second shifting component (B) is arranged in the neighborhood of a housing wall (GW) constituting an outer wall of the transmission housing (GG).

12. Multistep automatic transmission according to one of the claims 1 thru 11, **characterized in that** the servo unit (210) of the second shifting component (B) is supported on the sun gear (SO1) of the first planetary gearset (RS1).

13. Multistep automatic transmission according to one of the claims 1 thru 11,
**characterized in that** the servo unit (210) of the second shifting component (B) is supported on the shaft which centrally reaches through the first planetary gearset (RS1), in particular the drive shaft (AN).

14. Multistep automatic transmission according to one of the claims 1 thru 13, **characterized in that** disks (300, 400) of the third and fourth shifting components (C, D) are arranged axially adjacent to the housing wall (GW).

15. Multistep automatic transmission according to one of the claims 1 thru 14, **characterized in that** disks (200) of the second shifting component (B) are arranged more closely towards the first planetary gearset (RS1) than the disks of the fourth shifting component (400).

16. Multistep automatic transmission according to one of the claims 1 thru 15, **characterized in that** the disks (300) of the third shifting component (C) are arranged radially underneath the disks (400) of the fourth shifting component (D).

17. Multistep automatic transmission according to one of the claims 1 thru 13, **characterized in that** the disks (200, 300) of the second and third shifting components (B, C) are arranged axially adjacent to the housing wall (GW).

18. Multistep automatic transmission according to one of the claims 1 thru 13 or 17, **characterized in that** disks (400) of the fourth shifting component (D) are arranged more closely towards the first planetary gearset (RS1) than the disks (200) of the second shifting component (B).

19. Multistep automatic transmission according to one of the claims 1 thru 13, 17 or 18, **characterized in that** the disks (300) of the third shifting component (C) are arranged radially underneath the disks (200) of the second shifting component (B).

20. Multistep automatic transmission according to one of the claims 1 thru 13, **characterized in that** the disks (200, 300, 400) of the second, third and fourth shifting components (B, C, D) are arranged axially adjacent to the housing wall (GW).

21. Multistep automatic transmission according to one of the claims 1 thru 13, **characterized in that** the disks (300) of the third shifting component (C) are arranged radially underneath the disks (200) of the second shifting component (B) and the disks (200) of the second shifting component (B) are arranged radially underneath the disks (400) of the fourth shifting component (D).

22. Multistep automatic transmission according to one of the claims 1 thru 5 or 7 thru 13, **characterized in that** disks (300) of the third shifting component (C) are arranged more closely towards the second shifting component (B) than disks (400) of the fourth shifting component (D).

23. Multistep automatic transmission according to one of the claims 1 through 22, **characterized in that** the first shifting component (A) is arranged on the side of the third planetary gearset (RS3) not facing the second planetary gearset (RS2).

24. Multistep automatic transmission according to claim 23, **characterized in that** the first shifting component (A) is arranged adjacent to the third planetary gearset (RS3).

25. Multistep automatic transmission according to one of the claims 1 thru 24, **characterized in that** the first shifting component (A) is arranged adjacent to an outer wall of the transmission housing (GG) or to a transmission housing cover which is nonrotationally connected to the transmission housing (GG) and constitutes an outer wall of the automatic transmission.

26. Multistep automatic transmission according to one of the claims 1 thru 25, **characterized in that** eight axial bearings (AX1 thru AX8) are provided for axial support of components arranged within the transmission housing (GG).

27. Multistep automatic transmission according to one of the claims 1 thru 27, **characterized in that** the transmission housing (GG) accommodates four rotating sealing rings (RR1 thru RR4) for dynamic sealing of individual pressure and lubricant feed lines against each other and other components.

28. Multistep automatic transmission according to one of the claims 1 thru 27, **characterized in that** drive shaft (AN) and output shaft (AB) are arranged coaxially in relation to each other.

29. Multistep automatic transmission according to claim 28, **characterized in that** the output shaft (AB), which is actively connected to the ring gear (HO1) of the first planetary gearset (RS1), centrally extends through the third planetary gearset (RS3) in axial direction.

30. Multistep automatic transmission according to claim 28 or 29, **characterized in that** the output shaft (AB), which is actively connected to the ring gear (HO1) of the first planetary gearset (RS1), extends in axial direction centrally through a clutch space of the first shifting component (A) formed in particular by a disk carrier and/or the servo unit (110) of the first shifting component (A).

31. Multistep automatic transmission according to one of the claims 1 through 27, **characterized in that** drive shaft (AN) and output shaft (AB) are not arranged coaxially in relation to each other; in particular that drive shaft (AN) and output shaft (AB) are arranged paraxially or at angles to each other.

32. Multistep automatic transmission according to claim 31, **characterized in that** active connection between output shaft (AB) and ring gear (HO1) of the first planetary gearset (RS1) is provided by at least one first spur gear (STR1) arranged in the area radially above the first and/or second and/or third planetary gearset (RS1, RS2, RS3).

33. Multistep automatic transmission according to claim 31, charcterized in that active connection between output shaft (AB) and ring gear (HOI) of the first planetary gearset (RS1) is provided by at least one first spur gear (STR1) arranged axially between the third planetary gearset (RS3) and the first shifting component (A).

34. Multistep automatic transmission according to claim 31, **characterized in that** active connection between output shaft (AB) and ring gear (HO1) of the first planetary gearset (RS1) is provided by at least one first spur gear (STR1) arranged axially between the first shifting component (A) and an outer wall of the transmission housing (GG) or axially between the first shifting component (A) and a transmission housing cover which is nonrotationally connected to the transmission housing (GG).

35. Multistep automatic transmission according to claim 31 or 34, **characterized in that** active connection between output shaft (AB) and ring gear (HO1) of the first planetary gearset (RS1) is provided by at least one first spur gear (STR1) arranged axially adjacent to an outer wall of the transmission housing (GG) or a transmission housing cover which is nonrotationally connected to the transmission housing (GG).

36. Multistep automatic transmission according to one of the claims 1 thru 35, **characterized in that** the ring gear (HO1) of the first planetary gearset (RS1) and the spider (ST3) of the third planetary gearset (RS3) and the output shaft (AB) are permanently connected to each other, and that the spider (ST2) of the second planetary gearset (RS2) is permanently connected to a ring gear (H03) of the third planetary gearset (RS3) and the spider (ST1) of the first planetary gearset (RS1) is permanently connected to a ring gear (H02) of the second planetary gearset (RS2).

37. Multistep automatic transmission according to one of the claims 1 thru 35, **characterized in that** the ring gear (H01) of the first planetary gearset (RS1) and the spider (ST2) of the second planetary gearset (RS2) and the output shaft (AB) are permanently connected to each other, and that the spider (ST3) of the third planetary gearset (RS3) is permanently connected to a ring gear (H02) of the second planetary gearset (RS2) and the spider (ST1) of the first planetary gearset (RS1) is permanently connected to a ring gear (H03) of the third planetary gearset (RS3).

38. Multistep automatic transmission according to one of the claims 1 thru 37, **characterized in that** through selective locking of the shifting components (A thru E) at least six forward gears are engageable in such a manner that for shifts from one gear to the next higher or lower gear in each case only one of the shifting components actuated is unlocked and another shifting component is locked,
with the first and fourth shifting components (A, D) being locked in the first forward gear; the first and second shifting components (A, B) being locked in the third forward gear; the first and fifth shifting components (A, E) being locked in the fourth forward gear; the second and fifth shifting components (B, E) being locked in the fifth forward gear; the third and fifth shifting components (C, E) being locked in the sixth forward gear; and the second and fourth shifting components (B, D) being locked in a reverse gear.

## Revendications

1. Transmission automatique à plusieurs étages dotée d'un arbre d'entrée (AN), d'un arbre de sortie (AB), d'au moins trois trains épicycloïdaux individuels (RS1, RS2, RS3), ainsi que d'au moins cinq éléments de commande (A à E), sachant que
- les trois trains épicycloïdaux (RS1, RS2, RS3) sont disposés coaxialement entre eux,
- le deuxième train épicycloïdal (RS2) est disposé entre le premier et le deuxième train épicycloïdal (RS1, RS2),
- un planétaire (S03) du troisième train épicycloïdal (RS3) peut être fixé - à l'aide du premier élément de commande (A) - à un carter de la boîte de vitesses (GG) de la transmission automatique à plusieurs étages,
- l'arbre d'entrée (AN) est lié à un planétaire (SO2) du deuxième train épicycloïdal (RS2),
- l'arbre d'entrée (AN) peut être lié - à l'aide du deuxième élément de commande (B) - à un planétaire (SO1) du premier train épicycloïdal (RS1) et/ou à l'aide du cinquième élément de commande (E) à une nervure (ST1) du premier train épicycloïdal (RS1),
- alternativement, le planétaire (SO1) du premier train épicycloïdal (RS1) peut être lié - à l'aide du troisième élément de commande (C) - et/ou la nervure (ST1) du premier train épicycloïdal (RS1) - à l'aide du quatrième élément de commande (D) - au carter de la boîte de vitesses (GG),
- l'arbre de sortie (AB) est lié à une couronne (H1) du premier train épicycloïdal (RS1) et à une des nervures (ST2, ST3) du deuxième ou du troisième train épicycloïdal (RS3),
**caractérisée en ce que** le premier train épicycloïdal (RS1) et le deuxième train épicycloïdal (RS2) sont pénétrés centriquement et en sens axial complètement par un seul arbre.

2. Transmission automatique à plusieurs étages selon la revendication 1, **caractérisée en ce que** l'arbre pénétrant le premier et/ou le deuxième train épicycloïdal (RS1, RS2) en sens axial est l'arbre d'entrée (AN).

3. Transmission automatique à plusieurs étages selon la revendication 1 ou 2, **caractérisée en ce que** le cinquième élément de commande (E) est disposé entre le premier et le deuxième train épicycloïdal (RS1, RS2).

4. Transmission automatique à plusieurs étages selon une des revendications 1, 2 ou 3, **caractérisée en ce que** l'élément de liaison entre la nervure (ST1) du premier train épicycloïdal (RS1) et la couronne (HO2) du deuxième train épicycloïdal (RS2) forment en même temps un plateau porte-disques du cinquième élément de commande (E).

5. Transmission automatique à plusieurs étages selon une des revendications 1 à 4, **caractérisée en ce que** le deuxième élément de commande (B) est disposé sur le côté du premier train épicycloïdal (RS1) opposé au cinquième train épicycloïdal (E).

6. Transmission automatique à plusieurs étages selon une des revendications 1 à 5, **caractérisée en ce que** le troisième et le quatriéme éléments de commande (C, D) sont disposés sur le côté du premier train épicycloïdal (RS1) opposé au cinquième train épicycloïdal (E).

7. Transmission automatique à plusieurs étages selon une des revendications 1 à 5, **caractérisée en ce que** le troisième et le quatrième éléments de commande (C, D) sont juxtaposés en sens axial dans une zone radiale au-dessus des trains épicycloïdaux (RS1, RS2, RS3).

8. Transmission automatique à plusieurs étages selon une des revendications 1 à 7, **caractérisée en ce que** le dispositif d'assistance (510) du cinquième élément de commande (E) est logé sur un arbre pénétrant centriquement le premier train épicycloïdal (RS1), en particulier sur l'arbre d'entrée (AN).

9. Transmission automatique à plusieurs étages selon une des revendications 1 à 8, **caractérisée en ce que** le dispositif d'assistance (210) du deuxième élément de commande (B) est disposé plus proche du premier train épicycloïdal (RS1) que le dispositif d'assistance (310) du troisième élément de commande (C).

10. Transmission automatique à plusieurs étages selon une des revendications 1 à 9, **caractérisée en ce que** le dispositif d'assistance (210) du deuxième élément de commande (B) est disposé de façon juxtaposée au premier train épicycloïdal (RS1).

11. Transmission automatique à plusieurs étages selon une des revendications 1 à 9, **caractérisée en ce que** le dispositif d'assistance (210) du deuxième élément de commande (B) est disposé de façon juxtaposée à une paroi solidaire du carter de la boîte de vitesses (GW), celle-ci formant une paroi extérieure du carter de la boîte de vitesses (GG).

12. Transmission automatique à plusieurs étages selon une des revendications 1 à 11, **caractérisée en ce que** le dispositif d'assistance (210) du deuxième élément de commande (B) est logé sur le planétaire (SO1) du premier train épicycloïdal (RS1).

13. Transmission automatique à plusieurs étages selon une des revendications 1 à 11, **caractérisée en ce que** le dispositif d'assistance (210) du deuxième élément de commande (B) est logé sur l'arbre pénétrant centriquement le premier train épicycloïdal (RS1), en particulier sur l'arbre d'entrée (AN).

14. Transmission automatique à plusieurs étages selon une des revendications 1 à 13, **caractérisée en ce que** des disques (300, 400) du troisième et quatrième éléments de commande (C, D) sont axialement adjacents à la paroi du carter (GW).

15. Transmission automatique à plusieurs étages selon une des revendications 1 à 14, **caractérisée en ce que** les disques (200) du deuxième élément de commande (B) sont disposés plus proche du premier train épicycloïdal (RS1) que les disques du quatrième élément de commande (400).

16. Transmission automatique à plusieurs étages selon une des revendications 1 à 15, **caractérisée en ce que** les disques (300) du troisième élément de commande (C) sont disposés radialement en-dessous des disques (400) du quatrième élément de commande (D).

17. Transmission automatique à plusieurs étages selon une des revendications 1 à 13, **caractérisée en ce que** des disques (200, 300) du deuxième et troisième éléments de commande (B,C) sont axialement adjacents à la paroi du carter (GW).

18. Transmission automatique à plusieurs étages selon une des revendications 1 à 13 ou 17, **caractérisée en ce que** les disques (400) du quatrième élément de commande (D) sont disposés plus proche du premier train épicycloïdal (RS1) que les disques (200) du deuxième élément de commande (B).

19. Transmission automatique à plusieurs étages selon une des revendications 1 à 13, 17 ou 18, **caractérisée en ce que** les disques (300) du troisième élément de commande (C) sont disposés radialement en-dessous des disques (200) du deuxième élément de commande (B).

20. Transmission automatique à plusieurs étages selon une des revendications 1 à 13, **caractérisée en ce que** des disques (200, 300, 400) du deuxième, troisième et quatrième éléments de commande (B,C, D) sont axialement adjacents à la paroi du carter (GW).

21. Transmission automatique à plusieurs étages selon une des revendications 1 à 13, **caractérisée en ce que** les disques (300) du troisième élément de commande (C) sont disposés radialement en-dessous des disques (200) du deuxième élément de commande (B) et **en ce que** les lamelles (200) du deuxième élément de commande (B) sont disposés radialement en-dessous des disques (400) du quatrième élément de commande (D).

22. Transmission automatique à plusieurs étages selon une des revendications 1 à 5 ou 7 à 13, **caractérisée en ce que** les disques (300) du troisième élément de commande (C) sont disposés plus proche du deuxième élément de commande (B) que les disques (400) du quatrième élément de commande (D).

23. Transmission automatique à plusieurs étages selon une des revendications 1 à 22, **caractérisée en ce que** le premier élément de commande (A) est disposé sur le côté du troisième train épicycloïdal (RS3) opposé au deuxième train épicycloïdal (RS2).

24. Transmission automatique à plusieurs étages selon la revendication 23, **caractérisée en ce que** le premier élément de commande (A) est adjacent au troisième train épicycloïdal (RS3).

25. Transmission automatique à plusieurs étages selon une des revendications 1 à 24, **caractérisée en ce que** le premier élément de commande (A) est adjacent à une paroi extérieure du carter de la boîte de vitesses (GG) ou à un couvercle du carter de la boîte de vitesses, celui-ci étant lié solidaire en rotation avec le carter de la boîte de vitesses (GG) et formant une paroi extérieure de la transmission automatique.

26. Transmission automatique à plusieurs étages selon une des revendications 1 à 25, **caractérisée en ce que** sont prévus au total huit paliers de butée (AX1 - AX8) pour supporter dans le sens axial des éléments disposés à l'intérieur du carter de la boîte de vitesses (GG).

27. Transmission automatique à plusieurs étages selon une des revendications 1 à 27, **caractérisée en ce que** à l'intérieur du carter de la boîte de vitesses (GG) sont prévus au total quatre joints d'étanchéité tournants (RR1 - RR4) pour garantir l'étanchéité dynamique de différentes conduites d'amenée de pression et de lubrifiant, l'une par rapport à l'autre, et par rapport à d'autres éléments.

28. Transmission automatique à plusieurs étages selon une des revendications 1 à 27, **caractérisée en ce que** l'arbre d'entrée (AN) et l'arbre de sortie (AB) sont disposés coaxialement l'un par rapport à l'autre.

29. Transmission automatique à plusieurs étages selon la revendication 28, **caractérisée en ce que** l'arbre de sortie (AB) lié activement à la couronne (HO1) du premier train épicycloïdal (RS1) pénètre centriquement et dans le sens axial le troisième train épicycloïdal (RS3).

30. Transmission automatique à plusieurs étages selon les revendications 28 ou 29, **caractérisée en ce que** l'arbre de sortie (AB) lié activement à la couronne (HO1) du premier train épicycloïdal (RS1) pénètre centriquement et en sens axial une chambre d'embrayage du premier élément de commande (A), celle-ci étant, en particulier, formée par un plateau porte-disques et/ou le dispositif d'assistance (110) du premier élément de commande (A).

31. Transmission automatique à plusieurs étages selon une des revendications 1 à 27, **caractérisée en ce que** l'arbre d'entrée (AN) et l'arbre de sortie (AB) ne sont pas disposés coaxialement l'un par rapport à l'autre, et **en ce que**, en particulier, l'arbre d'entrée (AN) et l'arbre de sortie (AB) sont disposés dans un plan parallèle à l'axe ou angulairement l'un par rapport à l'autre.

32. Transmission automatique à plusieurs étages selon la revendication 31, **caractérisée en ce que** pour la liaison active entre l'arbre de sortie (AB) et la couronne (HO1) du premier train épicycloïdal (RS1) est prévu au moins un premier pignon cylindrique (STR1), celui-ci étant disposé dans la zone radiale au-dessus du premier et/ou du deuxième et/ou du troisième train épicycloïdal (RS1, RS2, RS3)

33. Transmission automatique à plusieurs étages selon la revendication 31, **caractérisée en ce que** pour la liaison active entre l'arbre de sortie (AB) et la couronne (HO1) du premier train épicycloïdal (RS1) est prévu au moins un premier pignon cylindrique (STR1), celui-ci étant disposé axialement entre le troisième train épicycloïdal (RS3) et le premier élément de commande (A).

34. Transmission automatique à plusieurs étages selon la revendication 31, **caractérisée en ce que** pour la liaison active entre l'arbre de sortie (AB) et la couronne (HO1) du premier train épicycloïdal (RS1) est prévu au moins un premier pignon cylindrique (STR1), celui-ci étant disposé axialement entre le premier élément de commande (A) et une paroi extérieure du carter de la boîte de vitesses (GG) ou axialement entre le premier élément de commande (A) et un couvercle du carter de la boîte de vitesses lié solidaire en rotation au carter de la boîte de vitesses (GG).

35. Transmission automatique à plusieurs étages selon la revendication 31 ou 34, **caractérisée en ce que** pour la liaison active entre l'arbre de sortie (AB) et la couronne (HO1) du premier train épicycloïdal (RS1) est prévu au moins un premier pignon cylindrique (STR1), celui-ci étant adjacent à une paroi extérieure du carter de la boîte de vitesses (GG) ou étant adjacent axialement à un couvercle du carter de la boîte de vitesses lié solidaire en rotation au carter de la boîte de vitesses (GG).

36. Transmission automatique à plusieurs étages selon une des revendications 1 à 35, **caractérisée en ce que** la couronne (HO1) du premier train épicycloïdal (RS1) et la nervure (ST3) du troisième train épicycloïdal (RS3) et l'arbre de sortie (AB) sont liés en permanence entre eux, et **en ce que** la nervure (ST2) du deuxième train épicycloïdal (RS2) est liée en permanence à une couronne (H03) du troisième train épicycloïdal (RS3) et **en ce que** la nervure (ST1) du premier train épicycloïdal (RS1) est lié en permanence à une couronne (H02) du deuxième train épicycloïdal (RS2).

37. Transmission automatique à plusieurs étages selon une des revendications 1 à 35, **caractérisée en ce que** la couronne (HO1) du premier train épicycloïdal (RS1) et la nervure (ST2) du deuxième train épicycloïdal (RS2) et l'arbre de sortie (AB) sont liés en permanence entre eux, et **en ce que** la nervure (ST3) du troisième train épicycloïdal (RS3) est liée en permanence à une couronne (H02) du deuxième train épicycloïdal (RS2) et **en ce que** la nervure (ST1) du premier train épicycloïdal (RS1) est lié en permanence à une couronne (H03) du troisième train épicycloïdal (RS3).

38. Transmission automatique à plusieurs étages selon une des revendications 1 à 37, **caractérisée en ce que** la fermeture sélective des éléments de commande (A à E) permet d'engager au moins six vitesses de marche avant de telle manière que, pour le passage à partir d'un rapport engagé au rapport immédiatement supérieur ou au rapport immédiatement inférieur, des éléments de commande qui viennent d'être sélectionnés, à chaque fois, n'est ouvert qu'un seul élément de commande et fermé un autre élément de commande, sachant que dans la première vitesse de marche avant sont fermés le premier et le quatrième élément de commande (A, D), dans la deuxième vitesse de marche avant sont fermés le premier et le troisième élément de commande (A, C), dans la troisième vitesse de marche avant sont fermés le premier et le deuxième élément de commande (A, B), dans la quatrième vitesse de marche avant sont fermés le premier et le cinquième élément de commande (A, E), dans la cinquième vitesse de marche avant sont fermés le deuxième et le cinquième élément de commande (B, E), dans la sixième vitesse de marche avant sont fermés le troisième et le cinquième élément de commande (C, E) et dans une marche arrière sont fermés le deuxième et le quatrième élément de commande (B, D).
